# EUROPEAN PATENT APPLICATION

(11) **EP 2 816 398 A1**
(43) Date of publication of application: **24.12.2014**
(21) Application number: 14171412.1
(22) Date of filing: 05.06.2014
(51) Int. Cl.: G02F 1/1335, G02F 1/1333

(54) **Display device**

(30) Priority: 17.06.2013 KR 20130069275; 17.06.2013 KR 20130069276; 17.06.2013 KR 20130069277
(71) Applicant: LG Electronics, Inc., Seoul 150-721 (KR)
(72) Inventor: Kim, Jaeho, 137-724 Seoul (KR); Kim, Kyoungmok, 137-724 Seoul (KR); Kim, Youngsung, 137-724 Seoul (KR); Heo, Jinha, 137-724 Seoul (KR)
(74) Representative: Ter Meer Steinmeister & Partner

(57) **Abstract**

Provided is a display device that includes a display panel (100) including a front substrate (101) and a back substrate (111). A frame (1600) is provided behind the display panel (100), and a supporting film (400) is provided between the display panel (100) and the frame (1600). The supporting film (400) is connected to a rear surface of the display panel (100) and to the frame (1600). An optical layer (110) is provided between the supporting film (400) and the frame (1600). The supporting film (400) extends from the display panel (100) to the frame (1600) such that the supporting film (400) is provided a prescribed distance (D1) from an edge of the optical layer (110) in a first direction (DR1) parallel to a front surface of the display panel (100).

## Description

### 1. Field

Embodiments of the disclosure relate to a display device.

### 2. Background

With the development of the information society, various demands for display devices have been increasing. Various display devices, such as liquid crystal displays (LCDs), plasma display panels (PDPs), electroluminescent displays (ELDs), and vacuum fluorescent displays (VFDs), have been recently studied and used to meet various demands for the display devices. Among the display devices, a liquid crystal display panel of the liquid crystal display includes a liquid crystal layer, and a thin film transistor (TFT) substrate and a color filter substrate which are positioned opposite each other with the liquid crystal layer interposed therebetween. The liquid crystal display panel displays an image using light provided by a backlight unit of the liquid crystal display.

The above references are incorporated by reference herein where appropriate for appropriate teachings of additional or alternative details, features and/or technical background.

### SUMMARY OF THE INVENTION

In one aspect, there is a display device comprising a display panel including a front substrate and a back substrate, a frame provided behind the display panel, a supporting film provided between the display panel and the frame, the supporting film being connected to a rear surface of the display panel and to the frame, and an optical layer provided between the supporting film and the frame, wherein the supporting film extends from the display panel to the frame such that the supporting film is provided a prescribed distance from an edge of the optical layer in a first direction parallel to a front surface of the display panel.

The display panel further includes a front polarizing film attached to a front surface of the front substrate, and a back polarizing film attached to a rear surface of the back substrate, wherein a first surface of the back polarizing film is attached to the rear surface of the back substrate, and wherein the supporting film is attached to a second surface of the back polarizing film opposite the first surface.

A width of the back polarizing film is greater than a width of the optical layer in the first direction.

The supporting film includes a first region and a second region provided adjacent to the first region in the first direction, wherein a groove is provided on the supporting film between the first region and the second region, the supporting film being bent at the groove.

A width of the first region is greater than a width of the back polarizing film in the first direction, and the width of the back polarizing film is greater than a width of the optical layer in the first direction.

The supporting film includes a third region provided adjacent the first region opposite the second region in the first direction, the third region being connected to the frame.

A groove is provided between the first region and the third region, the supporting film being bent at the groove.

The third region includes at least one hole through which a fastening member is provided to fasten the third region to the frame.

The display device further comprises a resin layer provided between the supporting film and the back substrate of the display panel, the resin layer contacting an end of the back polarizing film.

The resin layer includes a portion that protrudes beyond the supporting film in the first direction away from a center of the display panel.

The display panel includes a first short side, a second short side opposite the first short side, a first long side adjacent to the first short side and the second short side, and a second long side opposite the first long side, wherein the resin layer includes a first resin layer corresponding to the first short side, and a second resin layer corresponding to the second short side.

The resin layer includes a third resin layer corresponding to the first long side.

The display device further comprises an opaque layer provided between the front substrate and the back substrate of the display panel, wherein the opaque layer is provided along an outer portion of the display panel and spatially overlaps the optical layer in a second direction perpendicular to the front surface of the display panel.

The opaque layer includes a first end and a second end opposite the first end, wherein the second end is provided toward an outer edge of the display panel and the first end is provided toward a center of the display panel, and wherein a distance between the first end of the opaque layer and the edge of the optical layer in the first direction is less than the prescribed distance between the supporting film and the optical layer in the first direction.

A width of the frame is greater than a width of the optical layer in the first direction.

### BRIEF DESCRIPTION OF THE DRAWINGS

The embodiments will be described in detail with reference to the following drawings in which like reference numerals refer to like elements wherein:
Figures 1 to 30 illustrate configuration of a display device and a display panel according to an exemplary embodiment of the disclosure;
Figures 31 to 52 illustrate a display device according to an exemplary embodiment of the disclosure including a resin layer;
Figures 53 to 59 illustrate a display device according to an exemplary embodiment of the disclosure to which a bracket is applied;
Figures 60 to 70 illustrate configuration of a display device according to an exemplary embodiment of the disclosure;
Figures 71 to 80 illustrate another method for connecting a supporting film to a frame; and
Figure 81 illustrates another configuration of a display device according to an exemplary embodiment of the disclosure.

### DETAILED DESCRIPTION OF THE EMBODIMENTS

Reference will now be made in detail embodiments of the disclosure examples of which are illustrated in the accompanying drawings. Since the present disclosure may be modified in various ways and may have various forms, specific embodiments are illustrated in the drawings and are described in detail in the present specification. However, it should be understood that the present disclosure are not limited to specific disclosed embodiments, but include all modifications, equivalents and substitutes included within the technical scope of the present disclosure.

The terms 'first', 'second', etc. may be used to describe various components, but the components are not limited by such terms. The terms are used only for the purpose of distinguishing one component from other components. For example, a first component may be designated as a second component without departing from the scope of the present disclosure. In the same manner, the second component may be designated as the first component.

The term "and/or" encompasses both combinations of the plurality of related items disclosed and any item from among the plurality of related items disclosed.

When an arbitrary component is described as "being connected to" or "being linked to" another component, this should be understood to mean that still another component(s) may exist between them, although the arbitrary component may be directly connected to, or linked to, the second component. In contrast, when an arbitrary component is described as "being directly connected to" or "being directly linked to" another component, this should be understood to mean that no component exists between them.

The terms used in the present application are used to describe only specific embodiments or examples, and are not intended to limit the present disclosure. A singular expression can include a plural expression as long as it does not have an apparently different meaning in context.

In the present application, the terms "include" and "have" should be understood to be intended to designate that illustrated features, numbers, steps, operations, components, parts or combinations thereof exist and not to preclude the existence of one or more different features, numbers, steps, operations, components, parts or combinations thereof, or the possibility of the addition thereof.

Unless otherwise specified, all of the terms which are used herein, including the technical or scientific terms, have the same meanings as those that are generally understood by a person having ordinary knowledge in the art to which the present disclosure pertains. The terms defined in a generally used dictionary must be understood to have meanings identical to those used in the context of a related art, and are not to be construed to have ideal or excessively formal meanings unless they are obviously specified in the present application.

The following exemplary embodiments of the present disclosure are provided to those skilled in the art in order to describe the present disclosure more completely. Accordingly, shapes and sizes of elements shown in the drawings may be exaggerated for clarity.

Hereinafter, a liquid crystal display panel is used as an example of a display panel. Other display panels may be used. For example, a plasma display panel (PDP), a field emission display (FED) panel, and an organic light emitting display panel may be used.

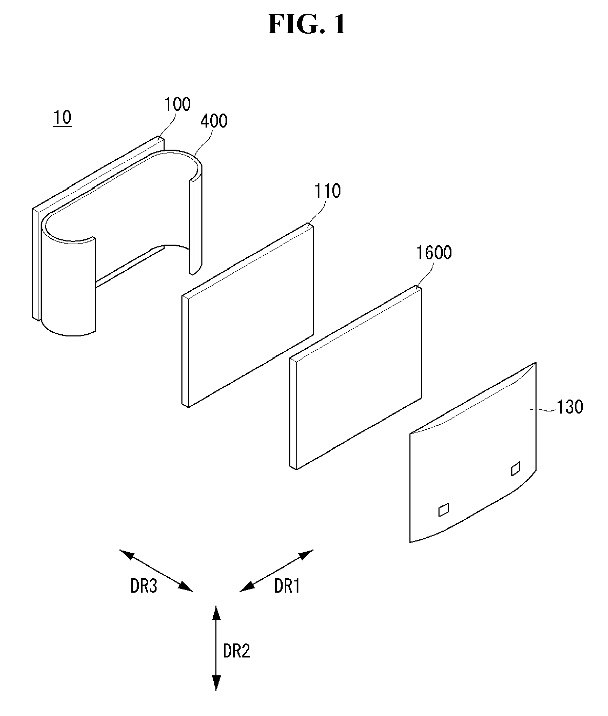

Figures 1 to 30 illustrate configuration of a display device and a display panel according to an exemplary embodiment of the disclosure.

In the embodiment of the disclosure, a transverse direction (i.e., a direction parallel to a long side) of the display device may be referred to as a first direction DR1; a longitudinal direction (i.e., a direction parallel to a short side) of the display device may be referred to as a second direction DR2; and a direction vertical to the display device may be referred to as a third direction DR3.

Further, in the embodiment of the disclosure, the third direction DR3 may be referred to as a vertical direction, and the first direction DR1 and the second direction DR2 may be commonly referred to as a horizontal direction.

Namely, in the embodiment of the disclosure, the horizontal direction may indicate at least one of the first direction DR1 and the second direction DR2.

As shown in Figure 1, a display device 10 according to the embodiment of the disclosure may include a display panel 100, a supporting film 400, an optical layer 110, a frame 1600, and a cover 130.

The display panel 100 displaying an image may include a front substrate and a back substrate which are positioned opposite each other.

The supporting film 400 may be attached to a back surface of the display panel 100.

The optical layer 110 may be disposed between the back substrate of the display panel 100 and the cover 130. The optical layer 110 may include a plurality of sheets. For example, although not shown, the optical layer 110 may include at least one of a prism sheet and a diffusion sheet.

The frame 1600 may be disposed in the rear of the optical layer 110. A driving board for driving the display panel 100 may be disposed on the frame 1600. The frame 1600 may contain a metal material such as aluminum. A light source part including at least one light source may be disposed on the frame 1600.

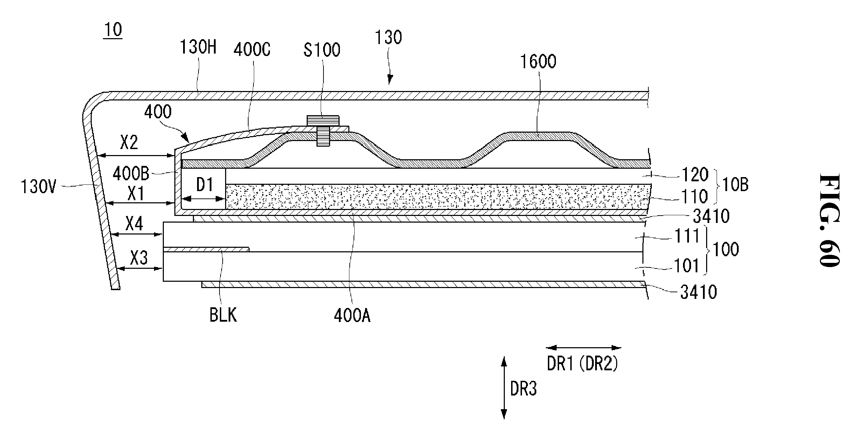

The cover 130 may be disposed in the rear of the optical layer 110. The cover 130 may include a back cover 130H including a portion disposed in the rear of the display panel 100 and a side cover 130V including a portion disposed on the side of the display panel 100 (see, for example, Figure 60). This is described in detail later.

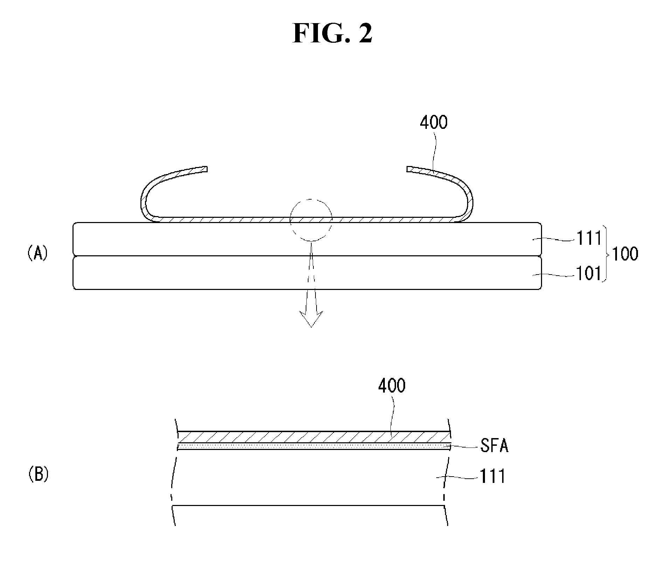

As shown in Figure 2, the display panel 100 may include a front substrate 101 and a back substrate 111, which are positioned opposite each other and are attached to each other to form a uniform cell gap therebetween. A liquid crystal layer (not shown) may be formed between the front substrate 101 and the back substrate 111. A seal part may be formed between the front substrate 101 and the back substrate 111 to seal the liquid crystal layer.

A color filter may be positioned on the front substrate 101 to implement red, green, and blue colors. The color filter may include a plurality of pixels each including red, green, and blue subpixels. When light is incident on the color filter, the color filter may generate an image corresponding to the red, green, or blue color. The pixels may include the red, green, and blue subpixels, but are not limited thereto. For example, white subpixels may be used, and various combinations of the subpixels may be used.

A predetermined transistor, for example, a thin film transistor (TFT) may be formed on the back substrate 111. The transistor may turn on or off liquid crystals in each pixel. In this instance, the front substrate 101 may be referred to as a color filter substrate, and the back substrate 111 may be referred to as a TFT substrate.

The liquid crystal layer may include a plurality of liquid crystal molecules, and the arrangement of the liquid crystal molecules may change in response to a driving signal supplied by the transistor. Hence, light provided by the light source part may be incident on the color filter based on changes in the molecular arrangement of the liquid crystal layer. As a result, the color filter may implement red, green, and blue light, and thus a predetermined image may be displayed on the front substrate 101 of the display panel 100.

Since the above-described structure and configuration of the display panel 100 are merely an example, they may be changed, added, or omitted. For example, the color filter for implementing red, green, and blue colors may be positioned on the back substrate 111, and the TFT may be formed on the front substrate 101. In this instance, the back substrate 111 may be referred to as the color filter substrate, and the front substrate 101 may be referred to as the TFT substrate.

As shown in (A) of Figure 2, the supporting film 400 may be disposed in the rear of the display panel 100, more specifically, in the rear of the back substrate 111. For example, as shown in (B) of Figure 2, an adhesive layer SFA may be disposed between the supporting film 400 and the back substrate 111 and may attach the supporting film 400 to the back substrate 111. Although not shown, the supporting film 400 may be connected to the frame 1600.

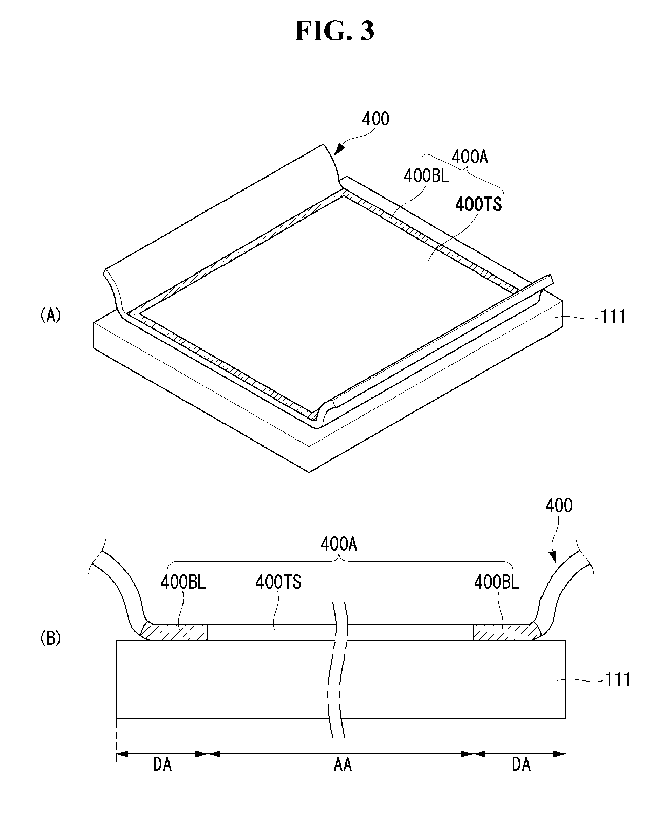

A partial area of the supporting film 400 may transmit light. For example, as shown in (A) of Figure 3, the supporting film 400 may include a transparent part 400TS and an opaque part 400BL which are attached to the back substrate 111 of the display panel 100. The transparent part 400TS and the opaque part 400BL of the supporting film 400 attached to the display panel 100 may be referred to as a first part 400A of the supporting film 400.

The opaque part 400BL may be positioned at an edge of the transparent part 400TS, and a light transmittance of the transparent part 400TS may be greater than a light transmittance of the opaque part 400BL. The opaque part 400BL may have a shape surrounding the transparent part 400TS.

The opaque part 400BL may block light provided by the light source part (not shown) from entering into an area other than a display area. As shown in (B) of Figure 3, the transparent part 400TS of the supporting film 400 may correspond to an active area AA of the display panel 100, on which an image is displayed. The opaque part 400BL of the supporting film 400 may correspond to a dummy area DA positioned outside the active area AA of the display panel 100.

The opaque part 400BL of the supporting film 400 may be darker than the transparent part 400TS, so as to reduce reflection of light. For example, the opaque part 400BL of the supporting film 400 may be almost black. For this, the opaque part 400BL may include a dye.

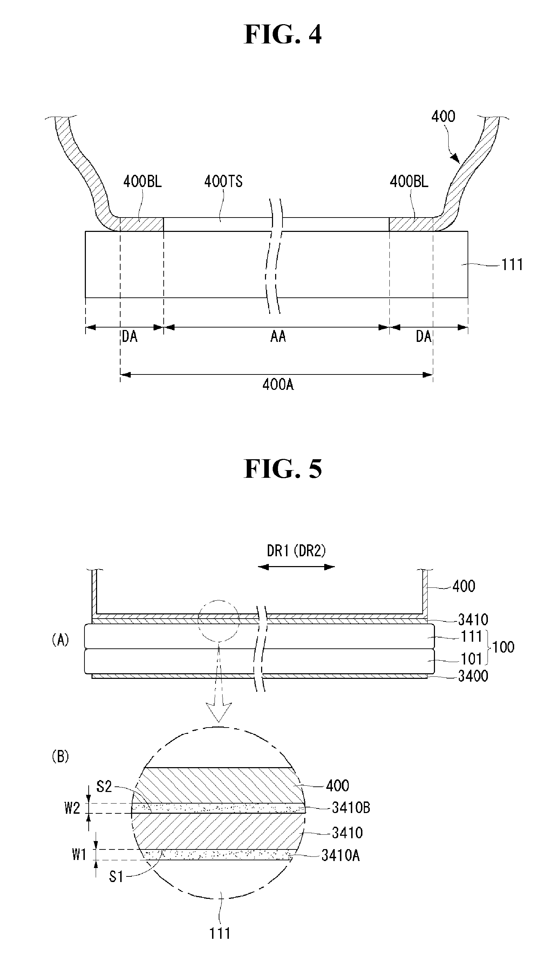

As shown in (B) of Figure 3, a portion of the supporting film 400 corresponding to the dummy area DA of the display panel 100 may include a dye. Alternatively, as shown in Figure 4, portions other than a portion of the supporting film 400 corresponding to the active area AA of the display panel 100 may include the dye. In this instance, portions other than the first part 400A of the supporting film 400 may include the dye.

On the other hand, the supporting film 400 may not include the dye. For example, the first part 400A of the supporting film 400 may not include the dye at least.

As shown in Figure 5, the display panel 100 may further include a front polarizing film 3400 and a back polarizing film 3410. For example, the front polarizing film 3400 may be positioned on a front surface of the front substrate 101 to polarize light passing through the display panel 100. The back polarizing film 3410 may be positioned on a back surface of the back substrate 111 to polarize light passing through the optical layer 110 positioned in the rear of the back substrate 111. In the embodiment disclosed herein, the front polarizing film 3400 may be referred to as a first polarizing film, and the back polarizing film 3410 may be referred to as a second polarizing film.

The supporting film 400 may be attached to the back polarizing film 3410. For this, an adhesive layer may be formed between the supporting film 400 and the back polarizing film 3410. More specifically, as shown in (B) of Figure 5, a first adhesive layer 3410A may be disposed between the back polarizing film 3410 and the back substrate 111, and a second adhesive layer 3410B may be disposed between the back polarizing film 3410 and the supporting film 400.

In other words, a first surface S1 of the back polarizing film 3410 may be attached to the back surface of the back substrate 111 through the first adhesive layer 3410A, and the supporting film 400 may be attached to a second surface S2 opposite the first surface S1 of the back polarizing film 3410.

The first adhesive layer 3410A and the second adhesive layer 3410B may be formed of the same material. Alternatively, the first adhesive layer 3410A and the second adhesive layer 3410B may be formed of different materials. Preferably, an adhesive strength of the second adhesive layer 3410B may be greater than an adhesive strength of the first adhesive layer 3410A, considering that the supporting film 400 supports the optical layer 110, the frame 1600, etc. In other words, an adhesive strength per unit area of the second adhesive layer 3410B may be greater than an adhesive strength per unit area of the first adhesive layer 3410A. Further, a thickness W2 of the second adhesive layer 3410B may be greater than a thickness W1 of the first adhesive layer 3410A, so as to improve the adhesive strength of the second adhesive layer 3410B.

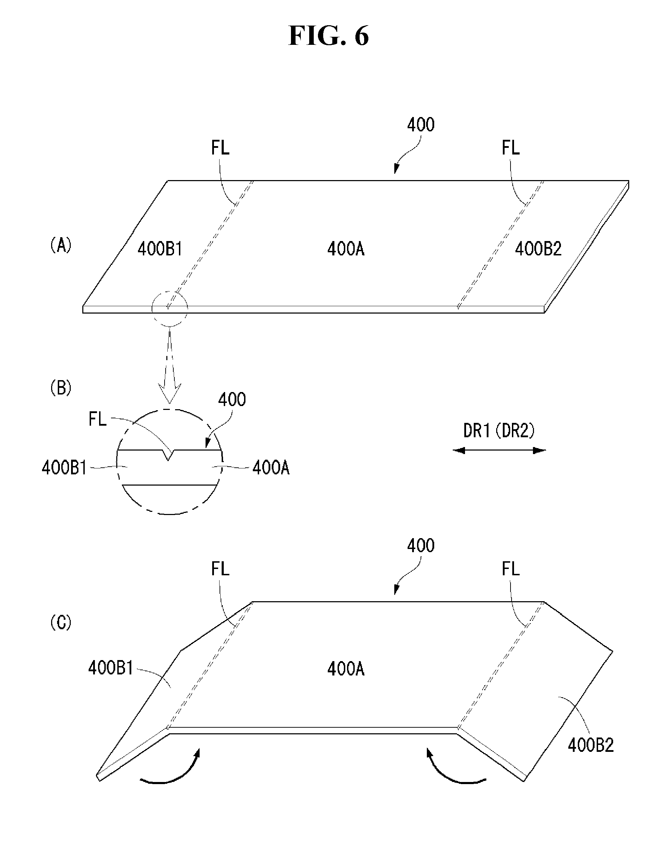

As shown in Figure 6, the supporting film 400 may include the first part 400A and second parts 400B1 and 400B2 which are positioned on at least one end of the first part 400A in the horizontal direction (i.e., the first direction DR1 and/or the second direction DR2).

A half cutting portion may be provided between the first part 400A and the second parts 400B1 and 400B2. For example, as shown in (A) and (B) of Figure 6, one surface of the supporting film 400 may be half-cut by a predetermined depth to form a folding line FL. The folding line FL may be formed at boundaries between the first part 400A and the second parts 400B1 and 400B2. Namely, the first part 400A and the second parts 400B1 and 400B2 may be divided from each other by the folding line FL.

Afterward, as shown in (C) of Figure 6, the first part 400A and the second parts 400B1 and 400B2 may be divided from each other by folding the supporting film 400 along the folding line FL. The folding line FL may be formed using a laser cutting method.

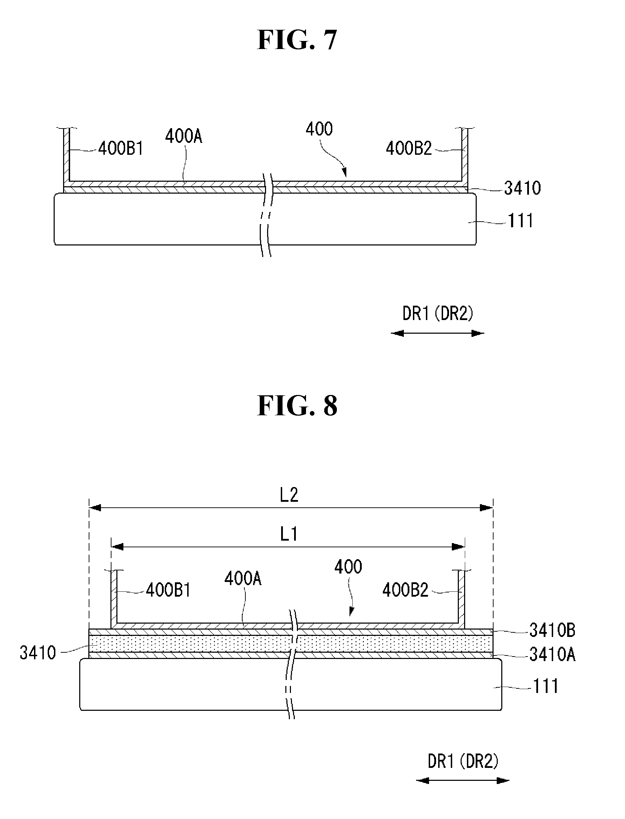

As shown in Figure 7, the first part 400A of the supporting film 400 may include a portion attached to the back polarizing film 3410. A width of the first part 400A may be almost equal to a width of the back polarizing film 3410 in the horizontal direction (i.e., the first direction DR1 and/or the second direction DR2).

On the other hand, as shown in Figure 8, a width L2 of the back polarizing film 3410 may be greater than a width L1 of the first part 400A of the supporting film 400 in the horizontal direction (i.e., the first direction DR1 and/or the second direction DR2). In this instance, at least one end of the back polarizing film 3410 may extend further than the first part 400A of the supporting film 400 in the horizontal direction (i.e., the first direction DR1 and/or the second direction DR2).

In this instance, the width L1 of the first part 400A of the supporting film 400 may be less than a width of the second adhesive layer 3410B in the horizontal direction (i.e., the first direction DR1 and/or the second direction DR2). Further, the width of the second adhesive layer 3410B may be almost equal to the width L2 of the back polarizing film 3410 in the horizontal direction (i.e., the first direction DR1 and/or the second direction DR2). In such a configuration, the first adhesive layer 3410A, the back polarizing film 3410, and the second adhesive layer 3410B may be attached to the back substrate 111 using a laminating method, and then the supporting film 400 may be attached to the second adhesive layer 3410B using the laminating method.

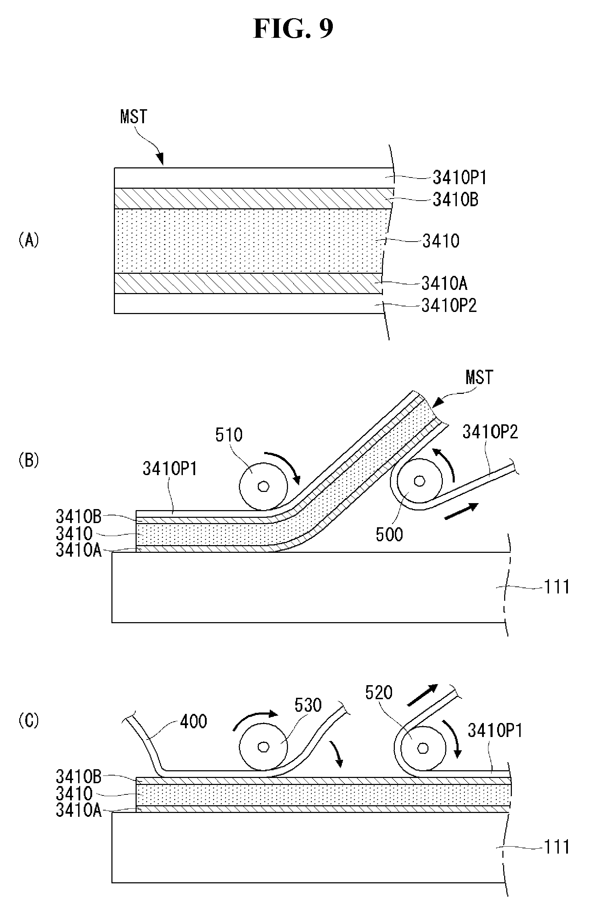

For example, as shown in (A) of Figure 9, the first adhesive layer 3410A may be disposed on the first surface of the back polarizing film 3410, and the second adhesive layer 3410B may be disposed on the second surface of the back polarizing film 3410. A first protective film 3410P1 may be disposed on the second adhesive layer 3410B, and a second protective film 3410P2 may be disposed on the first adhesive layer 3410A. A mother sheet MST including the first adhesive layer 3410A, the second adhesive layer 3410B, the back polarizing film 3410, the first protective film 3410P1, and the second protective film 3410P2 may be manufactured.

Afterwards, as shown in (B) of Figure 9, the second protective film 3410P2 may be peeled using a first roller 500. A pressure may be applied to the first protective film 3410P1 using a second roller 510, thereby attaching the first adhesive layer 3410A to the back substrate 111.

Afterwards, as shown in (C) of Figure 9, the first protective film 3410P1 may be peeled using a third roller 520. A pressure may be applied to the supporting film 400 using a fourth roller 530, thereby attaching the supporting film 400 to the second adhesive layer 3410B.

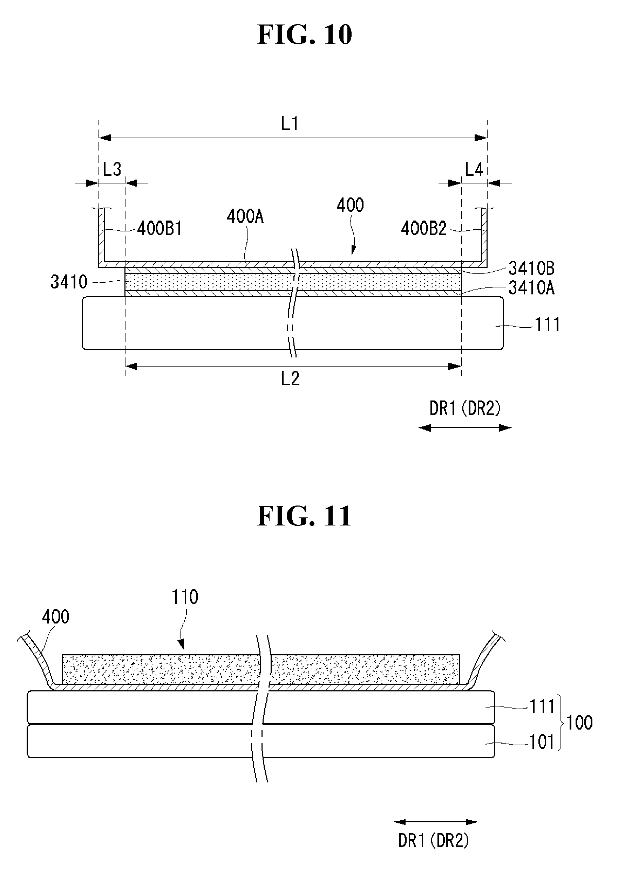

Alternatively, as shown in Figure 10, the width L1 of the first part 400A of the supporting film 400 may be greater than the width L2 of the back polarizing film 3410 in the horizontal direction (i.e., the first direction DR1 and/or the second direction DR2). In this instance, at least one end of the first part 400A of the supporting film 400 may extend further than the back polarizing film 3410 by predetermined lengths L3 and L4 in the horizontal direction (i.e., the first direction DR1 and/or the second direction DR2). In this instance, an inner space of the supporting film 400 may be sufficiently and widely used. Hence, an excessive increase in the size of a bezel area may be prevented.

As shown in Figure 11, the optical layer 110 may be disposed on the supporting film 400. In this instance, the optical layer 110 may put on the supporting film 400. Namely, the optical layer 110 may be close to the supporting film 400, and thus the optical layer 110 may contact the first part 400A of the supporting film 400.

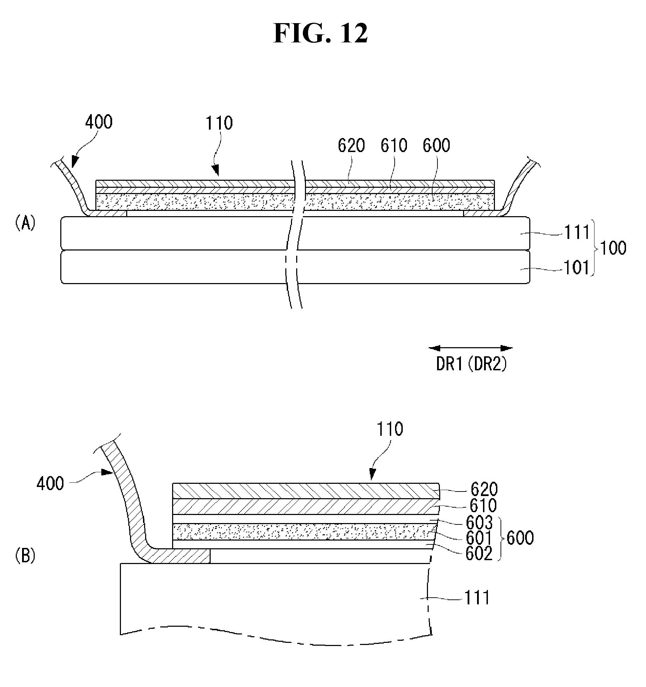

As shown in Figure 12, the optical layer 110 may include a plurality of sheets. For example, as shown in (A) of Figure 12, the optical layer 110 may include a reflective polarizer 600, a vertical prism sheet 610, and a horizontal prism sheet 620. Figure 12(A) shows that the vertical prism sheet 610 is disposed between the horizontal prism sheet 620 and the reflective polarizer 600. However, the horizontal prism sheet 620 may be disposed between the vertical prism sheet 610 and the reflective polarizer 600.

The reflective polarizer 600 may be referred to as a dual brightness enhancement film (DBEF). The reflective polarizer 600 may selectively transmit or reflect light depending on a wavelength of the light. The reflective polarizer 600 may transmit light of a predetermined wavelength and reflect light of other wavelengths through such a process, thereby reducing an amount of light blocked by the polarizing film disposed on the display panel 100. Hence, a luminance may be improved.

The vertical and horizontal prism sheets 610 and 620 may adjust a travelling path of light, so that the incident light travels to the display panel 100. Hence, a luminance of the image displayed on the display panel 100 may be improved.

Further, as shown in (B) of Figure 12, the reflective polarizer 600 may include a core layer 601, a first protective layer 602 positioned on a first surface of the core layer 601, and a second protective layer 603 positioned on a second surface of the core layer 601.

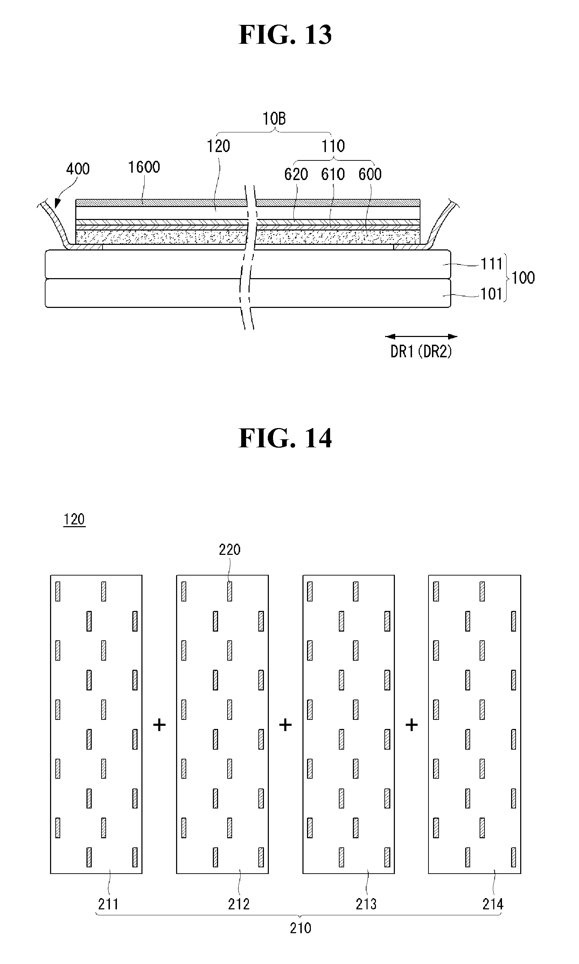

As shown in Figure 13, a light source part 120 may be disposed on the optical layer 110, and the frame 1600 may be disposed on the light source part 120. A component including the optical layer 110 and the light source part 120 may be referred to as a backlight unit 10B.

The light source part 120 may include various kinds of light sources in the embodiment of the disclosure. For example, the light sources of the light source part 120 may be one of a light emitting diode (LED) chip and a LED package having at least one LED chip. In this instance, the light source may be a colored LED emitting at least one of red, green, and blue light or a white LED.

The backlight unit 10B may be one of a direct type backlight unit and an edge type backlight unit. The edge type backlight unit may include a light guide plate. Moreover, the light source part 120 may include a plurality of substrates. For example, the light source part 120 of the backlight unit 10B according to the embodiment of the disclosure may include a plurality of substrates 211 to 214. Figure 14 shows that the backlight unit 10B according to an embodiment of the disclosure may include the four substrates 211 to 214. However, the embodiment of the disclosure is not limited thereto.

As shown in Figure 14, the light source part 120 may include the first substrate 211, the second substrate 212, the third substrate 213, and the fourth substrate 214. The first to fourth substrates 211 to 214 may be referred to as sub-substrates. Namely, the plurality of sub-substrates 211 to 214 may form one mother substrate.

In this instance, a plurality of light sources 220 may be disposed on each of the first to fourth substrates 211 to 214, and then the first to fourth substrates 211 to 214 may be coupled in parallel with one another. Hence, one mother substrate 210 may be manufactured.

If one mother substrate is damaged, only the corresponding substrate that is damaged may be replaced because the mother substrate 210 is divided into the plurality of substrates 211 to 214 as described above, and the other normal substrates may be continuously used. Hence, the material consumption resulting from the damage of the mother substrate 210 may be reduced, and the manufacturing cost may be reduced.

As described above, when the mother substrate 210 is divided into the plurality of substrates 211 to 214, a connector may be disposed on each of the substrates 211 to 214. The connector may be electrically connected to at least one light source 220 disposed on each of the substrates 211 to 214. Although not shown, the connector may electrically connect an external driving circuit to the light sources 220, thereby causing a driving voltage supplied by the driving circuit to be supplied to the light sources 220.

As described above, when the mother substrate 210 is divided into the plurality of substrates 211 to 214, the substrates 211 to 214 may be disposed in parallel, and then a reflective layer may be disposed on each of the substrates 211 to 214.

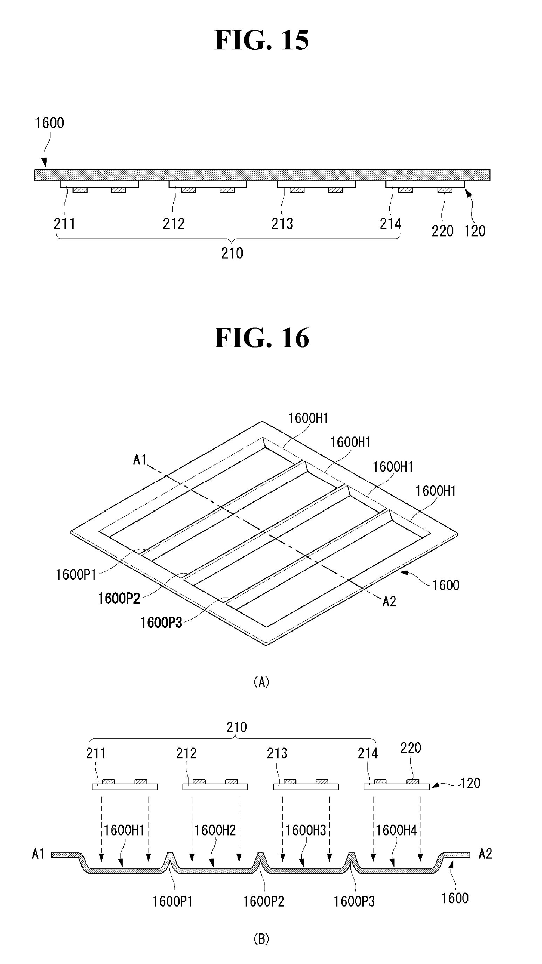

As shown in Figure 15, the substrate 210, on which at least one light source 220 is disposed, may be disposed on the frame 1600. Preferably, the first to fourth substrates 211 to 214 included in the substrate 210 may be disposed on the frame 1600.

The frame 1600 may include a depression corresponding to the substrate 210. For example, as shown in (A) and (B) of Figure 16, the frame 1600 may include a first depression 1600H1 corresponding to the first substrate 211, a second depression 1600H2 corresponding to the second substrate 212, a third depression 1600H3 corresponding to the third substrate 213, and a fourth depression 1600H4 corresponding to the fourth substrate 214. The first substrate 211 may be disposed in the first depression 1600H1; the second substrate 212 may be disposed in the second depression 1600H2; the third substrate 213 may be disposed in the third depression 1600H3; and the fourth substrate 214 may be disposed in the fourth depression 1600H4.

Further, the frame 1600 may include a first protrusion 1600P1 between the first depression 1600H1 and the second depression 1600H2, a second protrusion 1600P2 between the second depression 1600H2 and the third depression 1600H3, and a third protrusion 1600P3 between the third depression 1600H3 and the fourth depression 1600H4.

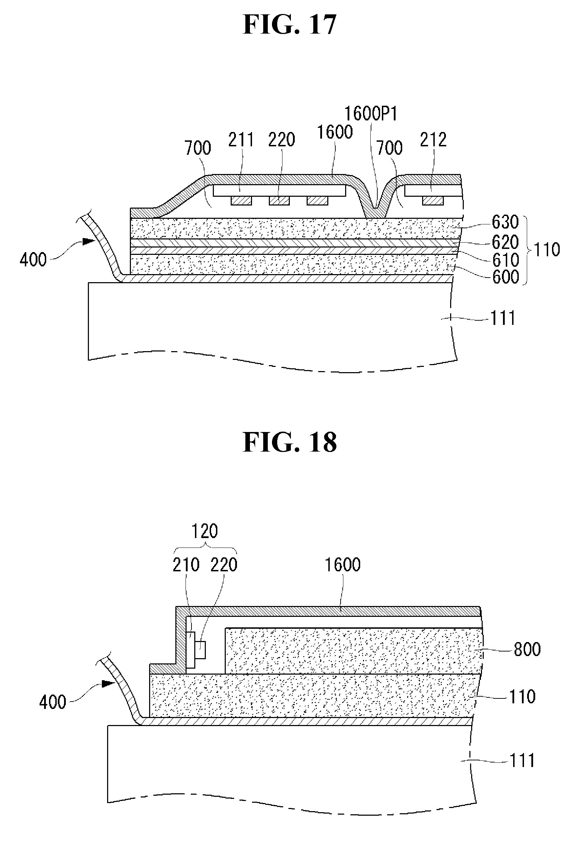

An air gap may be formed between the first to third protrusions 1600P1, 1600P2, and 1600P3 of the frame 1600 and the optical layer 110. For example, as shown in Figure 17, an air gap 700 may be formed between the first substrate 211 and the optical layer 110 and between the second substrate 212 and the optical layer 110 by the first to third protrusions 1600P1, 1600P2, and 1600P3. Namely, the air gap 700 may be provided between the optical layer 110 and the light source part 120.

As shown in Figure 17, the optical layer 110 may further include a diffusion plate 630. The diffusion plate 630 may be positioned between the prism sheet 610, 620 and the frame 1600. The diffusion plate 630 may diffuse light emitted from the light sources 220, thereby preventing the light being concentrating on a predetermined area. Because the light entering into the diffusion plate 630 is scattered while passing through the diffusion plate 630, the screen of the display panel 100 may be maintained at the uniform brightness. Disposition order of the reflective polarizer 600, the vertical prism sheet 610, the horizontal prism sheet 620, and the diffusion plate 630 included in the optical layer 110 may be changed.

Figure 17 shows that the optical layer 110 includes the four sheets. However, the number of sheets constituting the optical layer 110 is not limited thereto. The backlight unit 10B shown in Figure 17 may be the direct type backlight unit. However, the backlight unit 10B applied to the embodiment of the disclosure may be an edge type backlight unit. For example, as shown in Figure 18, the substrate 210, on which the light sources 220 are positioned, may be disposed on the frame 1600. A light guide plate 800 may be disposed between the frame 1600 and the optical layer 110. The light sources 220 may be positioned on the side of the light guide plate 800.

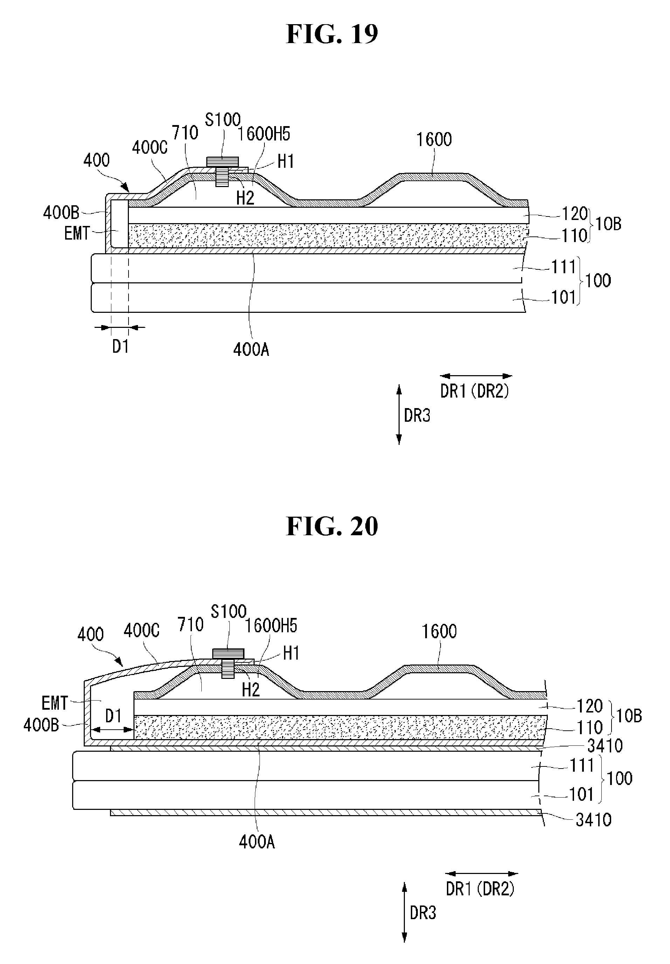

The supporting film 400 may be connected to the frame 1600. For example, as shown in Figure 19, the frame 1600 may further include a fifth depression 1600H5 which is depressed in a direction far from the display panel 100. A first fastening member S100 may fasten the supporting film 400 to the fifth depression 1600H5 of the frame 1600. For this, the frame 1600 may include a second hole H2, and a third part 400C of the supporting film 400 may include a first hole H1 corresponding to the second hole H2. The first fastening member S100 may pass through the first hole H1 and the second hole H2, thereby fastening the third part 400C of the supporting film 400 to the frame 1600.

The third part 400C of the supporting film 400 may be positioned on at least one end of a second part 400B of the supporting film 400. The supporting film 400 may include the first part 400A including a portion attached to the back substrate 111 of the display panel 100, the third part 400C including a portion positioned on a back surface of the frame 1600, and the second part 400B including a portion positioned on the side of the optical layer 110.

Because the supporting film 400 is connected to the frame 1600 as described above, the frame 1600, the light source part 120, and the optical layer 110 may be supported by the supporting film 400. In this instance, the supporting film 400 having flexibility may prevent an external force transferred to the frame 1600 from being transferred to the display panel 100. Hence, a light leakage phenomenon of the display panel 100 may be prevented.

An empty space EMT (or gap) may be provided between an end of the optical layer 110 and the supporting film 400 in the horizontal direction (i.e., the first direction DR1 and/or the second direction DR2). More specifically, the empty space EMT may be provided between the end of the optical layer 110 and the second part 400B of the supporting film 400 in the horizontal direction (i.e., the first direction DR1 and/or the second direction DR2).

In this instance, even if the optical layer 110 expands depending on a temperature change and thus a width of the optical layer 110 increases, a collision between the optical layer 110 and the supporting film 400 may be prevented. Hence, structural stability and optical characteristics of the display device may be improved.

As shown in Figure 20, the end of the optical layer 110 may overlap the empty space EMT in the vertical direction (i.e., the third direction DR3). That is, the empty space EMT formed by the supporting film 400 may extend over the optical sheet in the third direction DR3.

In this instance, the inner space of the supporting film 400 in the horizontal direction (i.e., the first direction DR1 and/or the second direction DR2) may be sufficiently secured, and thus the width of the optical layer 110 may sufficiently increase. In addition, the collision between the optical layer 110 and the supporting film 400 resulting from the temperature change may be prevented.

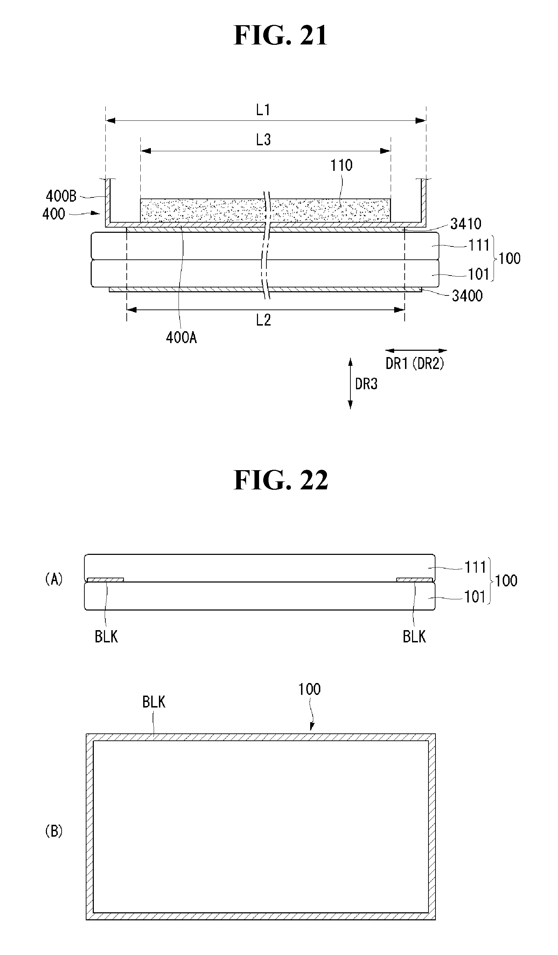

In this instance, as shown in Figure 21, the width L2 of the back polarizing film 3410 may be greater than a width L3 of the optical layer 110 in the horizontal direction (i.e., the first direction DR1 and/or the second direction DR2). More specifically, the width L1 of the first part 400A of the supporting film 400 may be greater than the width L2 of the back polarizing film 3410 in the horizontal direction (i.e., the first direction DR1 and/or the second direction DR2). Further, the width L2 of the back polarizing film 3410 may be greater than the width L3 of the optical layer 110 in the horizontal direction (i.e., the first direction DR1 and/or the second direction DR2).

As shown in Figure 22, a black layer BLK may be positioned between the front substrate 101 and the back substrate 111. As shown in (B) of Figure 22, the black layer BLK may be positioned outside the display panel 100. Namely, the black layer BLK may be formed in the shape surrounding the display panel 100. The black layer BLK may be referred to as an opaque layer or opaque region.

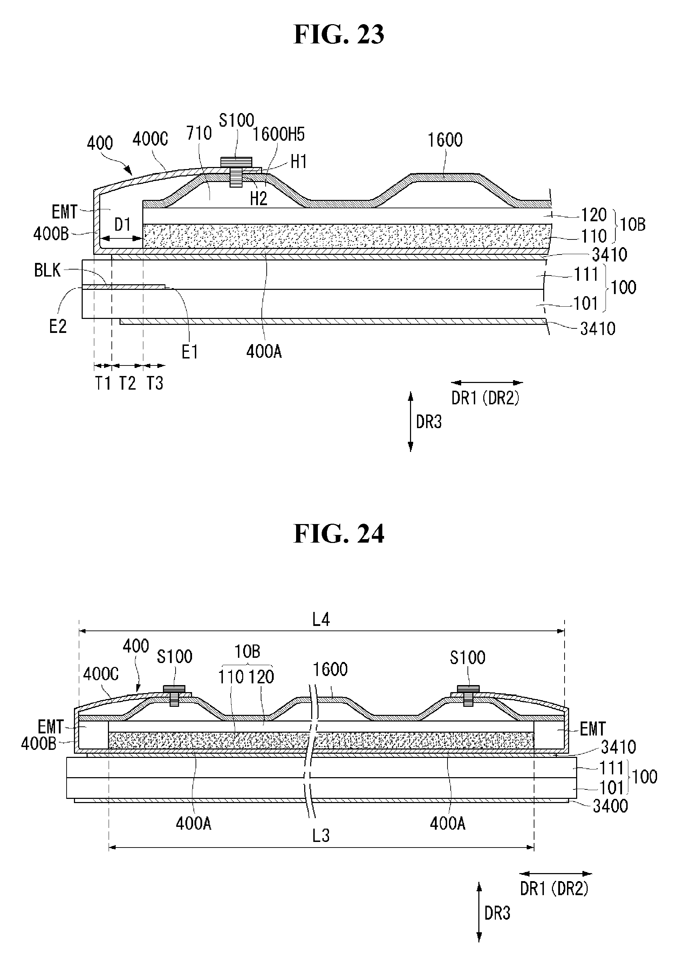

The black layer BLK may be used to divide the display panel 100 into the active area and from the dummy area (or inactive area). As shown in Figure 23, the black layer BLK may overlap the empty space EMT in the vertical direction (i.e., the third direction DR3). Further, the black layer BLK may overlap the optical layer 110 in the vertical direction (i.e., the third direction DR3).

The black layer BLK may include a first end E1 and a second end E2 opposite the first end E1. The second end E2 may be directed toward the outside of the display panel 100, and the first end E1 may be directed toward the middle of the display panel 100. The first end E1 of the black layer BLK may overlap the optical layer 110 in the vertical direction (i.e., the third direction DR3).

When a distance between the end of the optical layer 110 and the first end E1 of the black layer BLK in the horizontal direction (i.e., the first direction DR1 and/or the second direction DR2) is a first distance T3, and a distance between the supporting film 400 and the end of the optical layer 110 in the horizontal direction (i.e., the first direction DR1 and/or the second direction DR2) is a second distance D1, the distance D1 may be greater than the distance T3.

In this instance, the collision between the optical layer 110 and the supporting film 400 resulting from the temperature change may be prevented while reducing the size of the bezel area of the display device through a reduction in the size of the dummy area.

Further, when a distance between the end of the optical layer 110 and the end of the back polarizing film 3410 in the horizontal direction (i.e., the first direction DR1 and/or the second direction DR2) is a third distance T2, and a distance between the end of the first part 400A of the supporting film 400 and the end of the back polarizing film 3410 in the horizontal direction (i.e., the first direction DR1 and/or the second direction DR2) is a fourth distance T1, the first distance T3 may be less than the distance T2 and may be greater than the distance T1.

As shown in Figure 24, the frame 1600 may include a portion extending further than the optical layer 110 in the horizontal direction (i.e., the first direction DR1 and/or the second direction DR2). In this instance, a width L4 of the frame 1600 may be greater than the width L3 of the optical layer 110 in the horizontal direction (i.e., the first direction DR1 and/or the second direction DR2). In such a structure, the collision between the optical layer 110 and the supporting film 400 resulting from the temperature change may be more efficiently prevented.

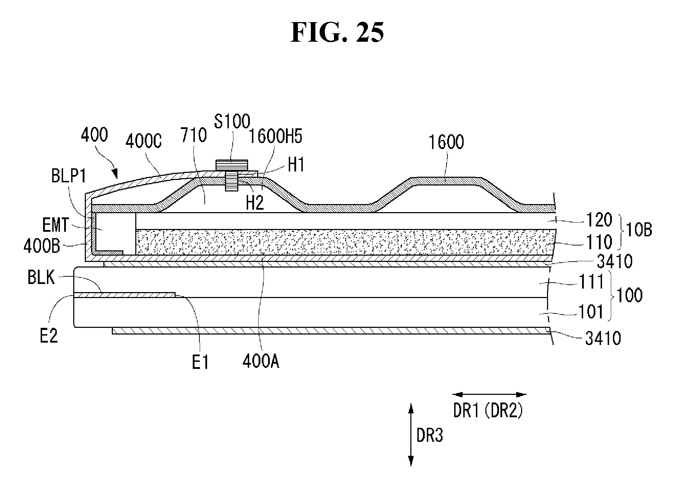

As shown in Figure 25, a black part BLP1 may be positioned on an inner surface of the second part 400B of the supporting film 400. The black part BLP1 may be implemented as a black tape and may be attached to the second part 400B of the supporting film 400. The black part BLP1 may be referred to herein as an opaque region BLP1.

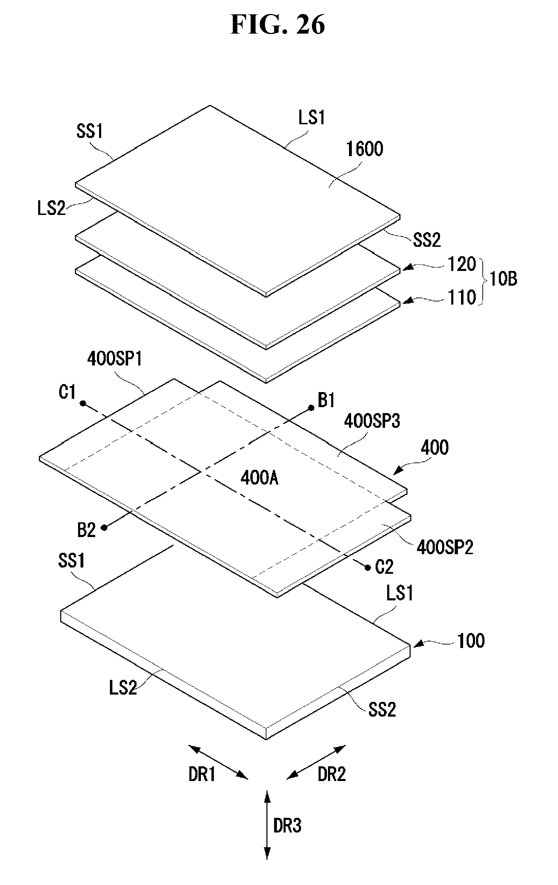

As shown in Figure 26, the frame 1600 may include a first long side area LS1, a second long side area LS2 opposite the first long side area LS1, a first short side area SS1 adjacent to the first and second long side areas LS1 and LS2, and a second short side area SS2 opposite the first short side area SS1. The first long side area LS1, the second long side area LS2, the first short side area SS1, and the second short side area SS2 of the frame 1600 may respectively correspond to a first long side LS1, a second long side LS2, a first short side SS1, and a second short side SS2 of the display panel 100 or the display device 10.

The supporting film 400 may include a first short side part 400SP1 positioned on the first short side area SS1, a second short side part 400SP2 positioned on the second short side area SS2, and a first long side part 400SP3 positioned on the first long side area LS1. The first short side part 400SP1 may be connected to the frame 1600 on the first short side area SS1 of the frame 1600, and the second short side part 400SP2 may be connected to the frame 1600 on the second short side area SS2 of the frame 1600. The first long side part 400SP3 may be connected to the frame 1600 on the first long side area LS1 of the frame 1600.

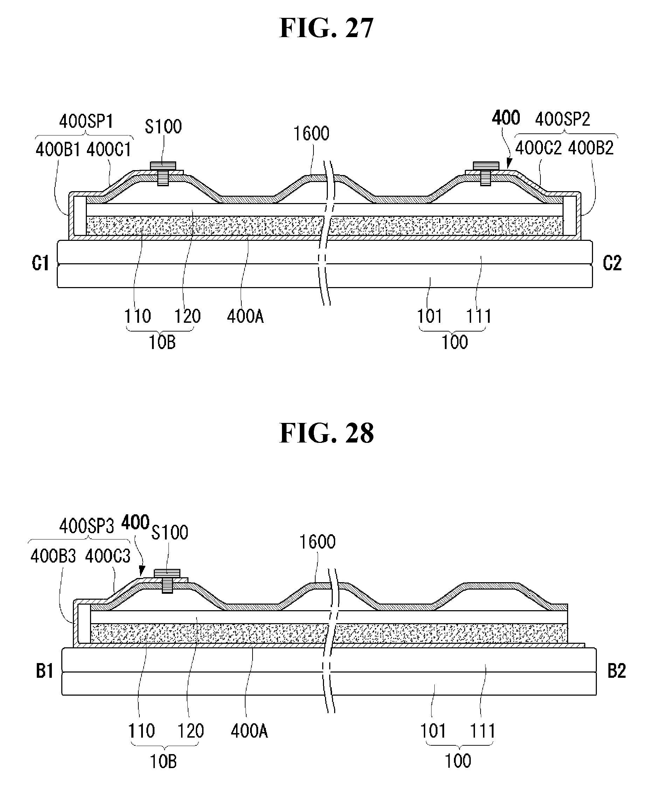

Each of the first short side part 400SP1, the second short side part 400SP2, and the first long side part 400SP3 may include the second part 400B and the third part 400C. As shown in Figure 27 which is a cross-sectional view taken along line C1-C2 of Figure 26, the supporting film 400 may be connected to the back surface of the frame 1600 at both ends of the display device.

In this instance, the first short side part 400SP1 may include a part 400B1 including a portion positioned on the side of the optical layer 110 and a part 400C1 including a portion positioned on the back surface of the frame 1600. Further, the second short side part 400SP2 may include a part 400B2 including a portion positioned on the side of the optical layer 110 and a part 400C2 including a portion positioned on the back surface of the frame 1600.

As shown in Figure 28 which is a cross-sectional view taken along line B1-B2 of Figure 26, the supporting film 400 may be connected to the back surface of the frame 1600 at one end of the display device. In this instance, the first long side part 400SP3 may include a part 400B3 including a portion positioned on the side of the optical layer 110 and a part 400C3 including a portion positioned on the back surface of the frame 1600.

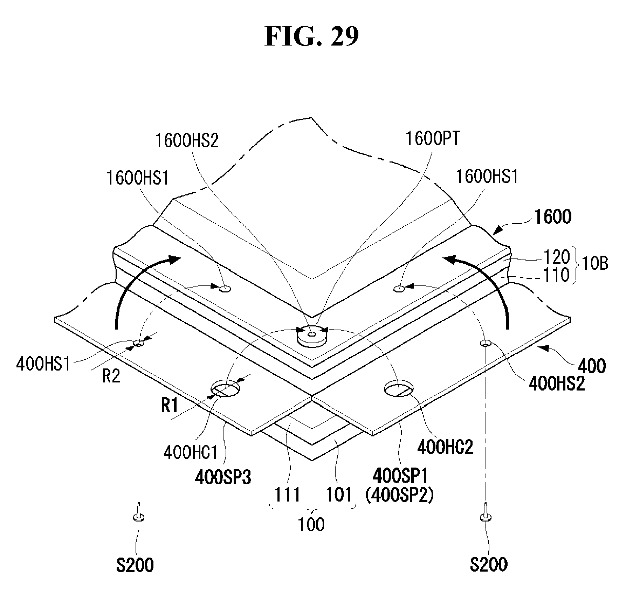

As shown in Figure 29, the frame 1600 may include at least one hole. More specifically, the frame 1600 may include a first frame hole 1600HS1 and a frame protrusion 1600PT. Moreover, the supporting film 400 may include a first film hole 400HS1 corresponding to the first frame hole 1600HS1 of the frame 1600. Further, the supporting film 400 may include first and second common holes 400HC1 and 400HC2 corresponding to the frame protrusion 1600PT.

Second fastening members S200 may pass through the first film hole 400HS1 and the first frame hole 1600HS1 to fasten the supporting film 400 to the frame 1600. For example, a predetermined second fastening member S200 may pass through the first film hole 400HS1 formed in the first short side part 400SP1 of the supporting film 400 and the first frame hole 1600HS1 formed in the first short side area SS1 of the frame 1600, thereby fastening the supporting film 400 to the frame 1600. Further, other second fastening member S200 may pass through the first film hole 400HS1 formed in the first long side part 400SP3 of the supporting film 400 and the first frame hole 1600HS1 formed in the first long side area LS1 of the frame 1600, thereby fastening the supporting film 400 to the frame 1600.

The frame protrusion 1600PT may include a second frame hole 1600HS2. The frame protrusion 1600PT may be formed at a boundary between the first long side area LS1 and the first short side area SS1 of the frame 1600 and may be inserted into the second common hole 400HC2 formed in the first short side part 400SP1 of the supporting film 400 and the first common hole 400HC1 formed in the first long side part 400SP3 of the supporting film 400.

In this instance, the first short side part 400SP1 and the first long side part 400SP3 of the supporting film 400 may overlap each other in the corner between the first long side area LS1 and the first short side area SS1 of the frame 1600. Similar to this, the second short side part 400SP2 and the first long side part 400SP3 of the supporting film 400 may overlap each other in the corner between the first long side area LS1 and the second short side area SS2 of the frame 1600.

In Figure 29, the second fastening member S200 may correspond to the first fastening member S100 shown in Figure 19, the first film hole 400HS1 may correspond to the first hold H1, and the first frame hole 1600HS1 may correspond to the second hole H2.

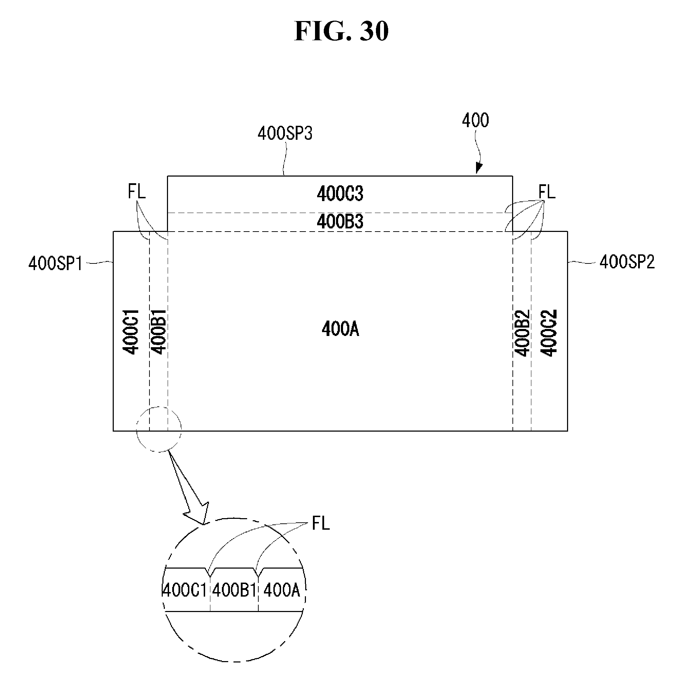

As shown in Figure 30, the half cutting method used to divide the first part 400A and the second part 400B of the supporting film 400 may be used to divide the second part 400B and the third part 400C of the supporting film 400 to form a folding line FL.

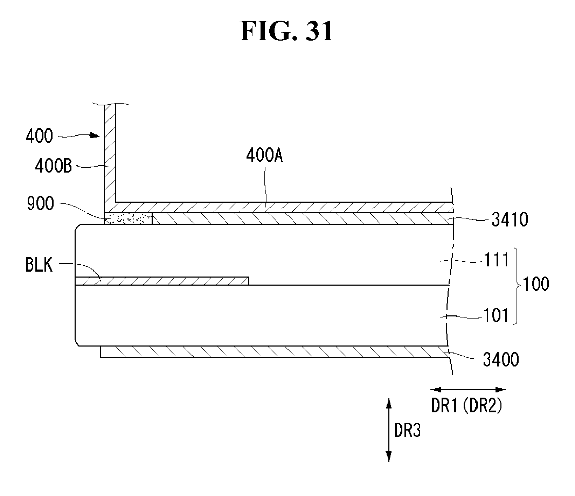

Figures 31 to 52 illustrate a display device including a resin layer. In the following description, the descriptions of the configuration and the structure described above are omitted.

As shown in Figure 31, when the back polarizing film 3410 is attached to the back substrate 111 and the supporting film 400 is attached to the back polarizing film 3410, a resin layer 900 may be formed at the edge of the first part 400A of the supporting film 400.

The resin layer 900 may contact the end of the back polarizing film 3410 and may be positioned between the supporting film 400 and the back substrate 111. The resin layer 900 may contain a material having elasticity, for example, a resin material. Alternatively, the resin layer 900 may contain a silicon material.

The resin layer 900 may overlap the black layer BLK in the vertical direction (i.e., the third direction DR3). The resin layer 900 may attach at least one edge of the first part 400A of the supporting film 400 to the back substrate 111 in the structure that the first part 400A of the supporting film 400 extends further than the back polarizing film 3410. Hence, the structural stability of the display device may be improved.

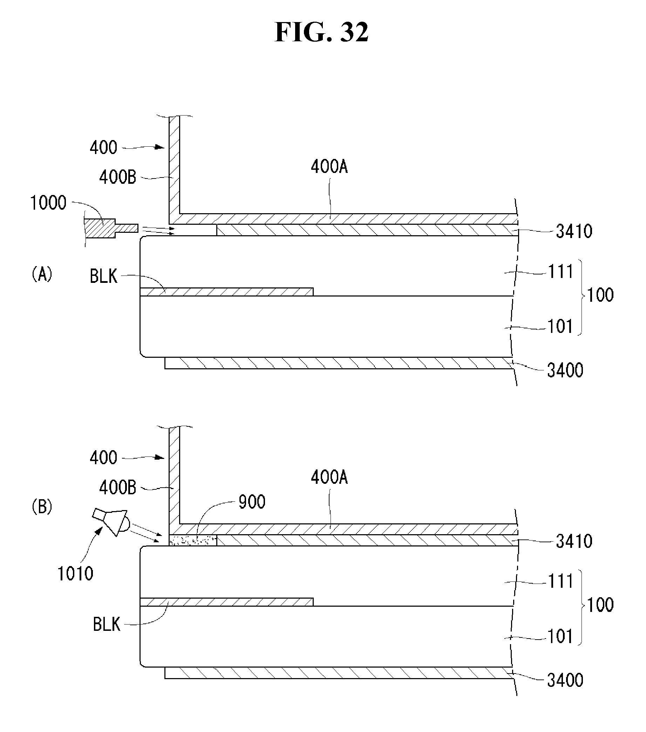

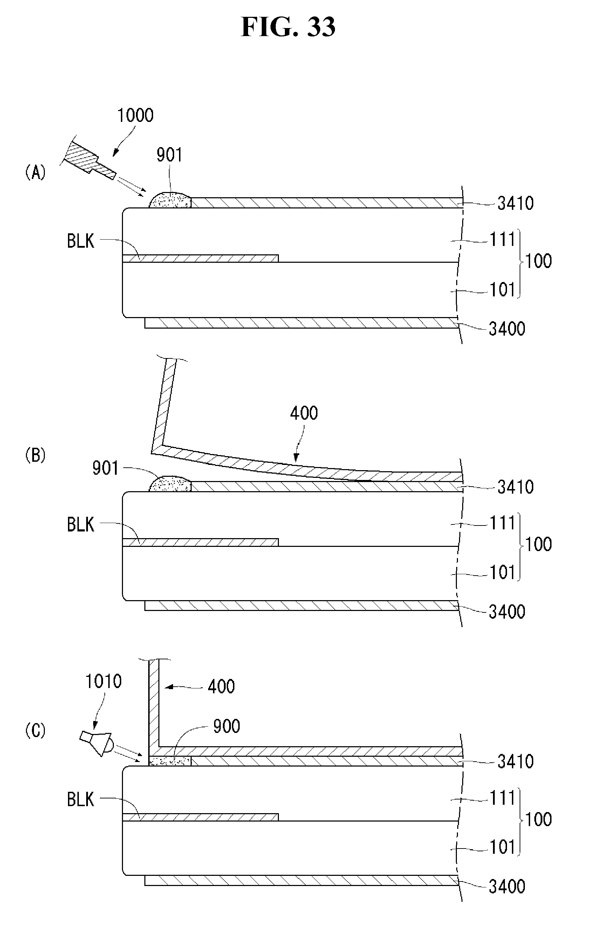

A method for forming the resin layer 900 is described below with reference to Figures 32 and 33. As shown in (A) of Figure 32, a resin material may be dispensed into a space between the supporting film 400 and the back substrate 111 using a dispensing device 1000 at the end of the back polarizing film 3410 in a state where the back polarizing film 3410 is attached to the back surface of the back substrate 111 and the supporting film 400 is attached to the back polarizing film 3410.

Next, as shown in (B) of Figure 32, predetermined light, for example, ultraviolet rays may be irradiated onto the dispensed resin material using a light irradiation device 1010. Hence, the resin material may be hardened to form the resin layer 900. In this instance, a photosensitive material, for example, a photocurable material may be used for the resin layer 900. If the resin material contains a material which is hardened in a sufficiently rapid time, the resin layer 900 may not include the photosensitive material. Accordingly, as shown in Figure 32, the resin layer 900 may be formed in a state where the supporting film 400 is attached to the back polarizing film 3410.

Alternatively, as shown in (A) of Figure 33, a resin material 901 may be dispensed to the end of the back polarizing film 3410 in a state where the back polarizing film 3410 is attached to the back substrate 111. Next, as shown in (B) of Figure 33, the supporting film 400 may be attached to the back polarizing film 3410 using the laminating method in a state where the resin material 901 is dispensed. Next, as shown in (C) of Figure 33, predetermined light, for example, ultraviolet rays may be irradiated onto the resin material 901 to form the resin layer 900.

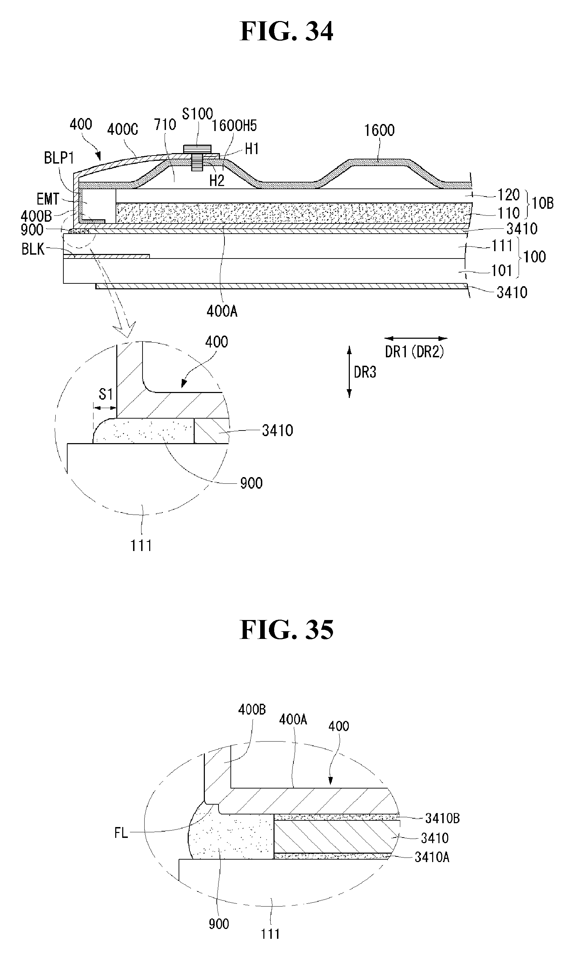

As shown in Figure 34, the resin layer 900 may include a portion extending further than the supporting film 400 by a predetermined length S1 in the horizontal direction (i.e., the first direction DR1 and/or the second direction DR2). In other words, the resin layer 900 may include a portion protruding further than the supporting film 400 in a direction away from the middle of the display panel 100. In this instance, one end of the resin layer 900 may be positioned between the end of the back substrate 111 and the end of the first part 400A of the supporting film 400.

As shown in Figure 35, the resin layer 900 may include a portion contacting the first part 400A of the supporting film 400 and a half-cut portion (i.e., a portion contacting the folding line FL) between the first and second parts 400A and 400B of the supporting film 400. As described above, when the half-cut portion between the first and second parts 400A and 400B of the supporting film 400 is covered by the resin layer 900, the structural stability of the supporting film 400 may be further improved.

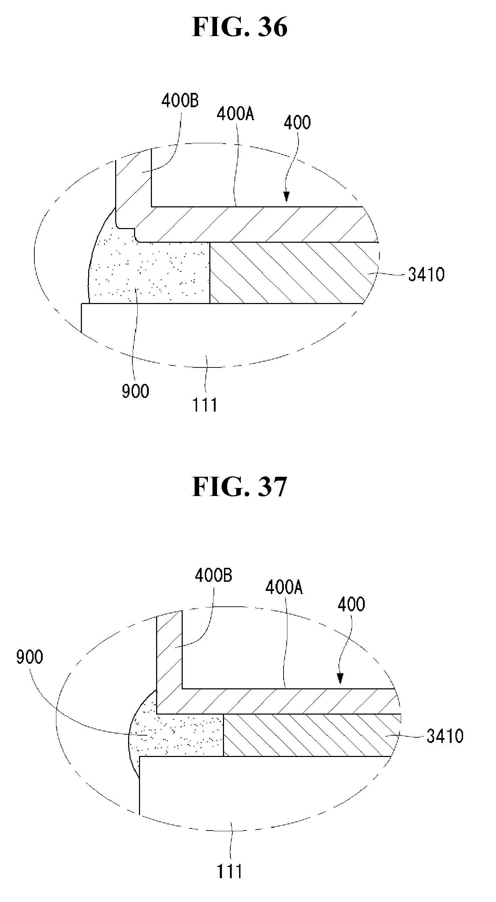

Alternatively, as shown in Figure 36, the resin layer 900 may include a portion contacting the first part 400A of the supporting film 400 and a portion contacting the second part 400B of the supporting film 400. The above-described structure may be achieved by increasing an amount of the resin material dispensed in the process for forming the resin layer 900. Alternatively, as shown in Figure 37, the resin layer 900 may further include a portion contacting the side of the back substrate 111.

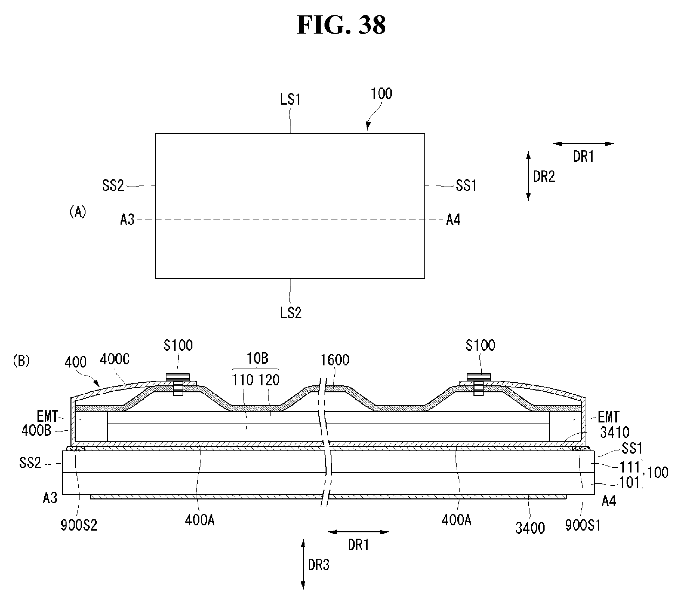

As shown in (B) of Figure 38 which is a cross-sectional view taken along line A3-A4 (i.e., the long sides LS1 and LS2 of the display panel 100) of (A) of Figure 38, a first resin layer 900S1 may be formed on the first short side SS1 of the display panel 100, and a second resin layer 900S2 may be formed on the second short side SS2 of the display panel 100.

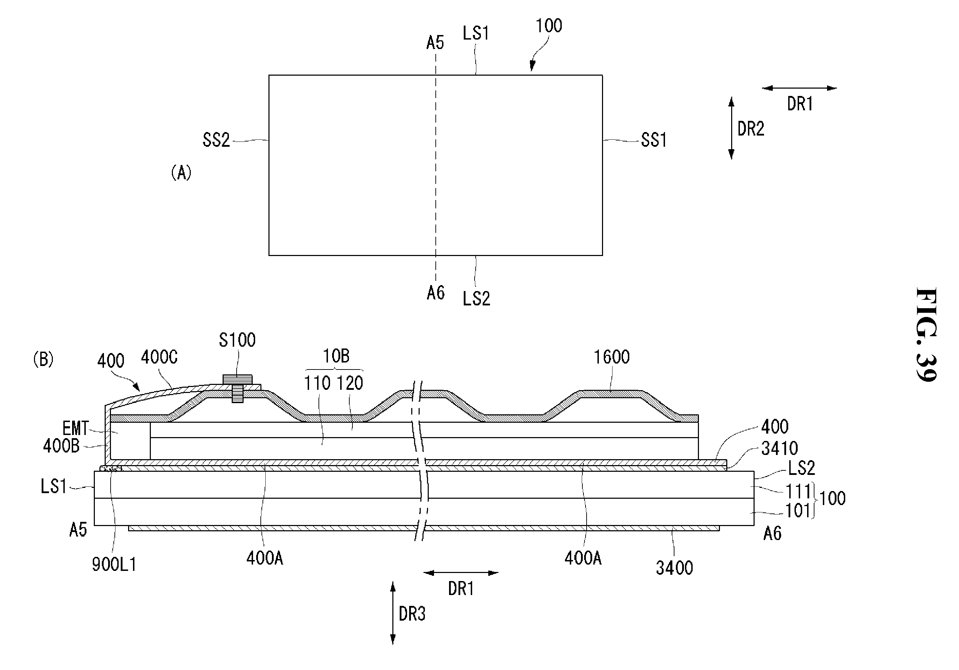

As shown in (B) of Figure 39 which is a cross-sectional view taken along line A5-A6 (i.e., the short sides SS1 and SS2 of the display panel 100) of (A) of Figure 39, a third resin layer 900L1 may be formed on the first long side LS1 of the display panel 100. The resin layer 900 may be not formed on the second long side LS2 of the display panel 100. Because the second part 400B of the supporting film 400 may be omitted in the area around the second long side LS2 of the display panel 100, the resin layer 900 may not be formed on the second long side LS2 of the display panel 100 as described above.

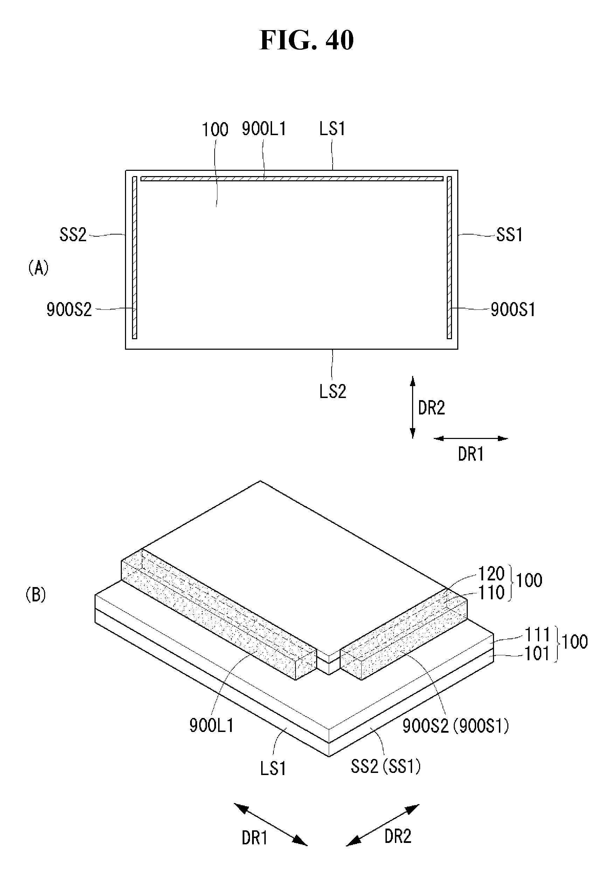

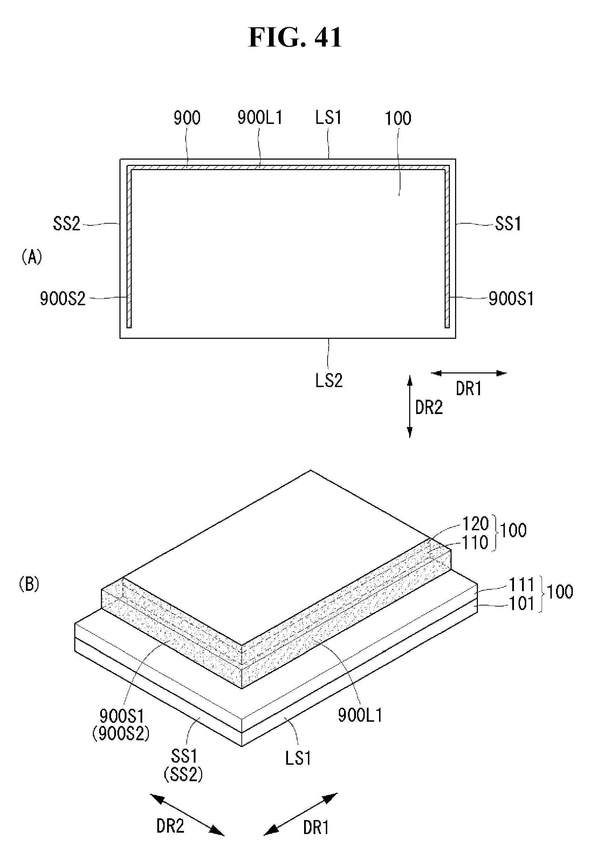

As shown in Figure 40, the first resin layer 900S1, the second resin layer 900S2, and the third resin layer 900L1 may be separated from one another. In other words, the first resin layer 900S1 and the third resin layer 900L1 may be separated from each other at the edge between the first short side SS1 and the first long side LS1 of the display panel 100. Similar to this, the second resin layer 900S2 and the third resin layer 900L1 may be separated from each other at the edge between the second short side SS2 and the first long side LS1 of the display panel 100. Alternatively, as shown in Figure 41, the third resin layer 900L1 may be connected to at least one of the first resin layer 900S1 and the second resin layer 900S2.

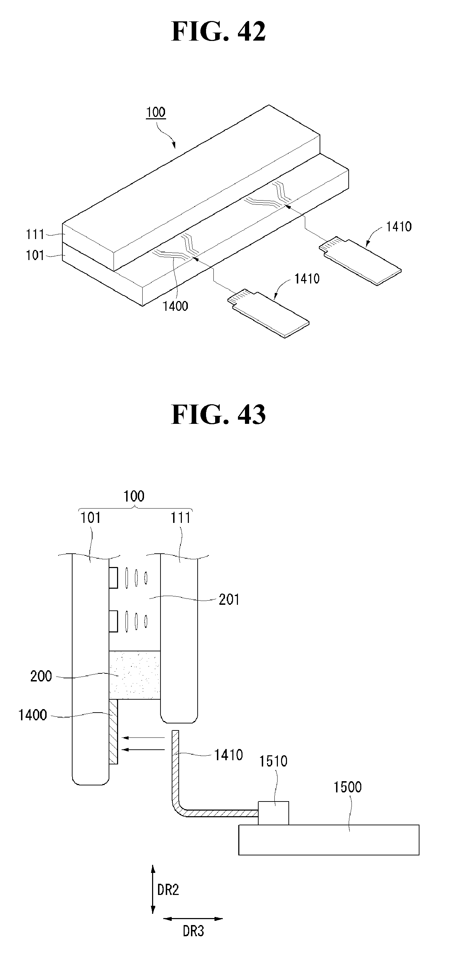

As shown in Figure 42, a pad electrode 1400 may be formed in the dummy area of the front substrate 101. The pad electrode 1400 formed in the dummy area of the front substrate 101 may be referred to as an electrode terminal. The pad electrode 1400 may also be formed in the dummy area of at least one side of the back substrate 111.

The following description will be described on the assumption that the pad electrode 1400 is formed on the front substrate 101. For example, the pad electrode 1400 may be formed in the area around the second long side LS2 of the front substrate 101.

The pad electrode 1400 may be electrically connected to a driving board for supplying the driving signal to the predetermined transistor. For example, as shown in Figures 42 and 43, a driving board 1500 for supplying the driving signal to the display panel 100 may be disposed in the rear of the display panel 100.

In this instance, a connector 1510 may be disposed on the driving board 1500. One end of a connection substrate 1410 including electrodes may be connected to the connector 1510, and the other end may be connected to the pad electrode 1400. Hence, the pad electrode 1400 may be electrically connected to the driving board 1500. As a result, the display panel 100 may be driven in response to a predetermined signal supplied by the driving board 1500.

In Figure 43, a reference numeral '201' denotes the liquid crystal layer. Moreover, the connection substrate 1410 may be a flexible circuit board for a tape carrier package (TCP) and a flexible printed circuit (FPC) board. Hence, the connection substrate 1410 may be referred to as a flexible substrate. The front substrate 101 may include a portion extending further than the back substrate 111 in the horizontal direction (i.e., the first direction DR1 and/or the second direction DR2), so as to easily connect the pad electrode 1400 to the connection substrate 1410.

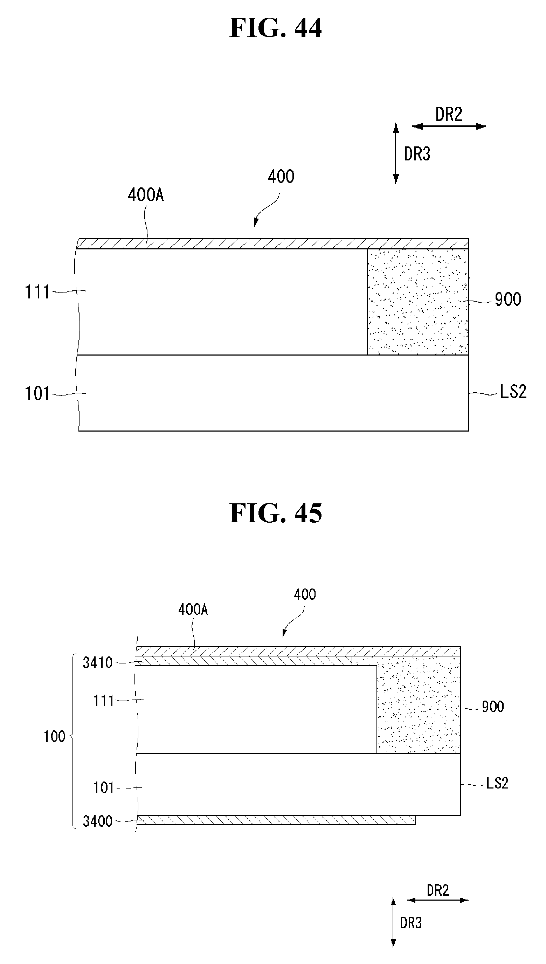

As shown in Figure 44, the resin layer 900 may include a portion positioned between the supporting film 400 and the front substrate 101 at the edge of at least one side of the display panel 100. For example, the resin layer 900 may include a portion positioned between the first part 400A of the supporting film 400 and the front substrate 101 in the area around the second long side LS2 of the display panel 100. Even in such a structure, as shown in Figure 45, the resin layer 900 may include a portion positioned between the first part 400A of the supporting film 400 and the back substrate 111 in the area around the second long side LS2 of the display panel 100.

In the structure shown in Figures 44 and 45, the first part 400A of the supporting film 400 may extend further than the back substrate 111 in the horizontal direction (i.e., the first direction DR1 and/or the second direction DR2) in the area around the second long side LS2 of the display panel 100.

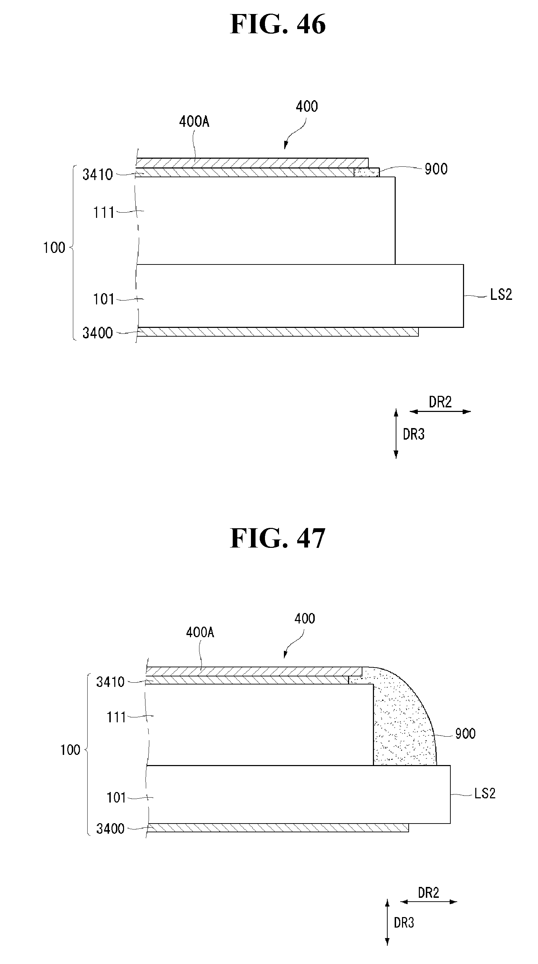

Alternatively, as shown in Figure 46, even when the front substrate 101 includes the portion extending further than the back substrate 111 in the horizontal direction (i.e., the first direction DR1 and/or the second direction DR2) in the area around the second long side LS2 of the display panel 100, the end of the resin layer 900 may be positioned between the end of the back polarizing film 3410 and the end of the back substrate 111.

As shown in Figure 47, even when the back substrate 111 extends further than the first part 400A of the supporting film 400 in the horizontal direction (i.e., the first direction DR1 and/or the second direction DR2) in the area around the second long side LS2 of the display panel 100, the resin layer 900 may include a portion covering the front substrate 101.

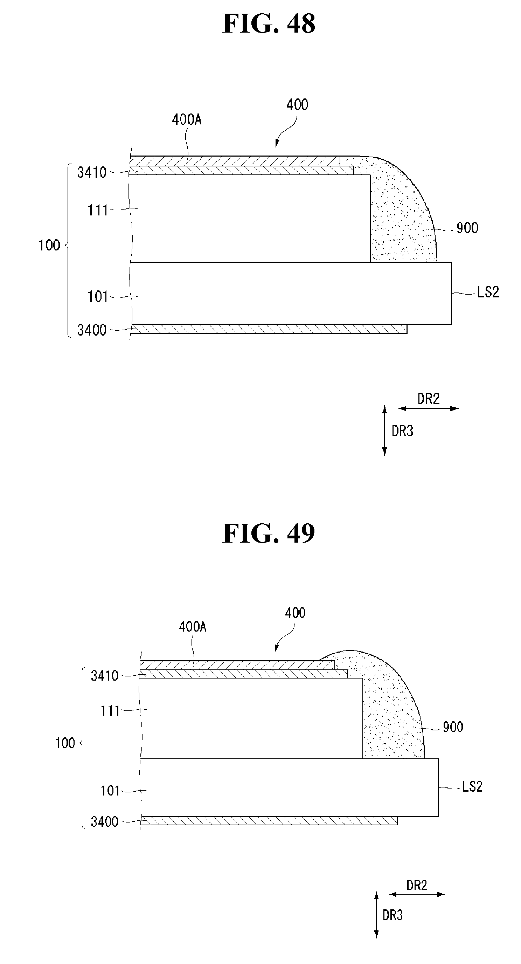

As shown in Figure 48, when the back polarizing film 3410 extends further than the first part 400A of the supporting film 400 in the horizontal direction (i.e., the first direction DR1 and/or the second direction DR2) in the area around the second long side LS2 of the display panel 100, the resin layer 900 may include a portion covering the back surface of the back polarizing film 3410.

Further, the resin layer 900 may include a portion contacting the side of the first part 400A of the supporting film 400. Alternatively, as shown in Figure 49, when the back polarizing film 3410 extends further than the first part 400A of the supporting film 400 in the horizontal direction (i.e., the first direction DR1 and/or the second direction DR2) in the area around the second long side LS2 of the display panel 100, the resin layer 900 may include a portion covering the back surface of the first part 400A of the supporting film 400.

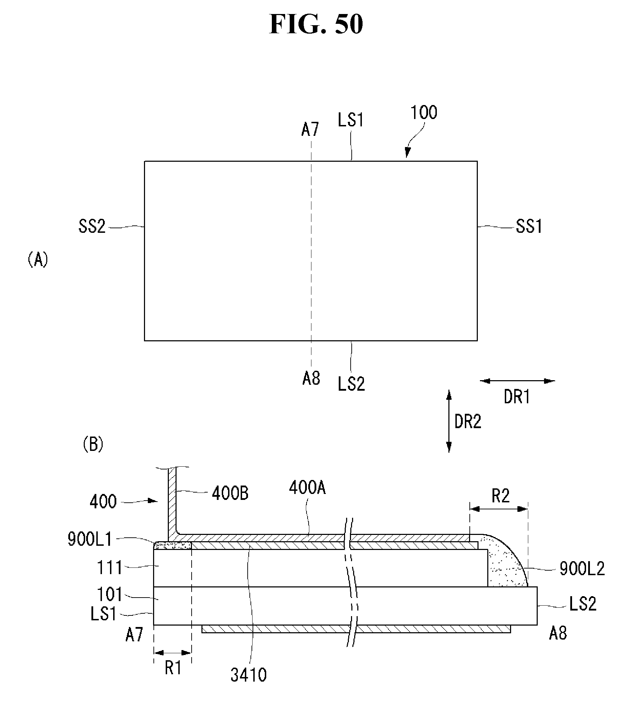

As shown in (B) of Figure 50 which is a cross-sectional view taken along line A7-A8 (i.e., the short sides SS1 and SS2 of the display panel 100) of (A) of Figure 50, the third resin layer 900L1 may be formed on the first long side LS1 of the display panel 100, and a fourth resin layer 900L2 may not be formed on the second long side LS2 of the display panel 100. The fourth resin layer 900L2 shown in (B) of Figure 50 may correspond to the resin layer 900 shown in Figures 44 to 49.

A width R2 of the fourth resin layer 900L2 may be greater than a width R1 of the third resin layer 900L1 in the second direction DR2 of the horizontal direction. Further, the width R2 of the fourth resin layer 900L2 may be greater than widths of the first resin layer 900S1 and the second resin layer 900S2 in the second direction DR2 of the horizontal direction.

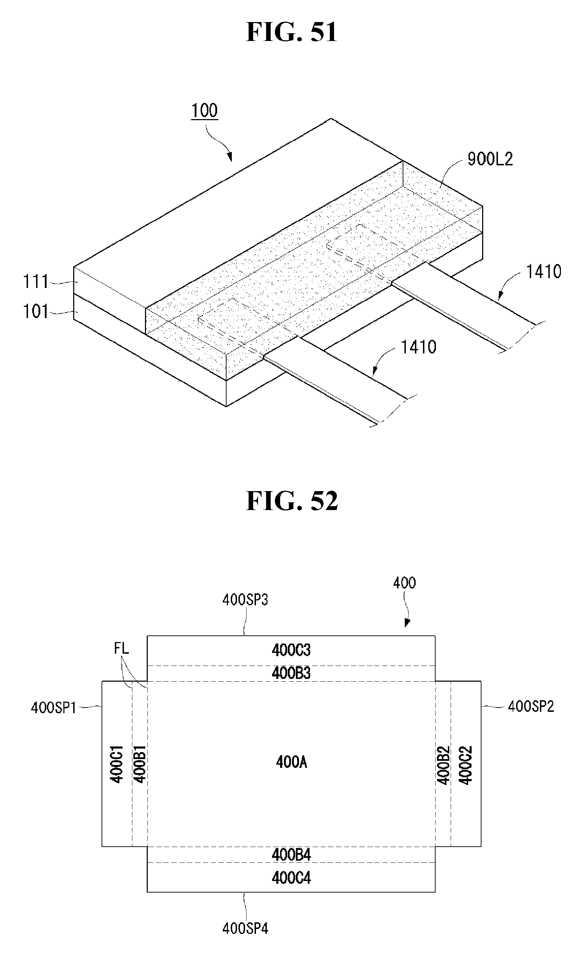

As shown in Figure 51, the connection substrate 1410 connected to the pad electrode may be disposed between the fourth resin layer 900L2 and the front substrate 101. Namely, the connection substrate 1410 electrically connected to the pad electrode of the front substrate 101 may include a portion covered by the fourth resin layer 900L2. The fourth resin layer 900L2 may contain an opaque resin material. In this instance, because the fourth resin layer 900L2 may cover the pad electrode and the connection substrate 1410, it may be advantageous to a design aspect.

As described above, when the fourth resin layer 900L2 is formed on the second long side LS2 of the display panel 100, the resin layer 900 may be formed in the shape surrounding the edges of the display panel 100. The resin layer 900 may cover the connection substrate 1410 on at least one side of the display panel 100, and the connection substrate 1410 may not be disposed between the resin layer 900 and the front substrate 101 on other side of the display panel 100.

Alternatively, the supporting film 400 may include the second part 400B even in the area around the second long side LS2 of the display panel 100. In this instance, as shown in Figure 52, the supporting film 400 may include a first short side part 400SP1 positioned on the first short side area SS1, a second short side part 400SP2 positioned on the second short side area SS2, a first long side part 400SP3 positioned on the first long side area LS1, and a second long side part 400SP4 positioned on the second long side area LS2. Further, the second long side part 400SP4 may include a second part 400B and a third part 400C in the same manner as the parts 400SP1, 400SP2, and 400SP3.

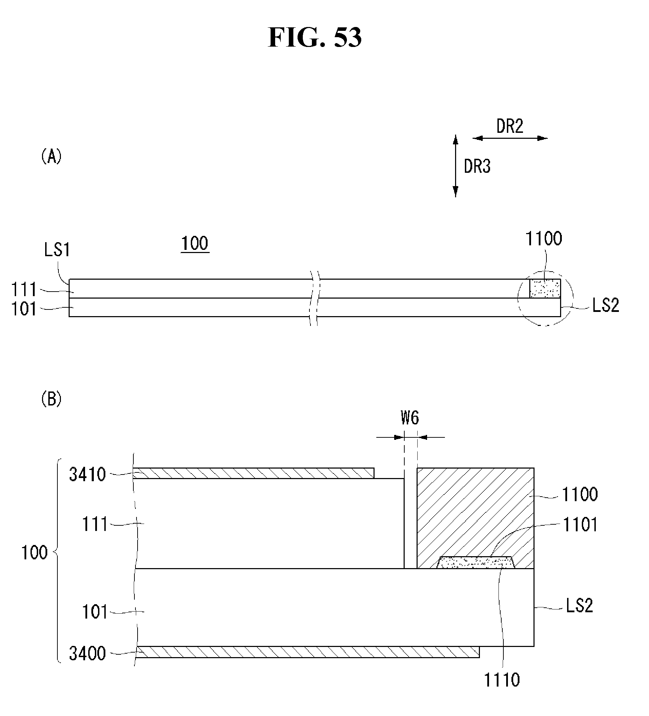

Figures 53 to 59 illustrate a display device according to the embodiment of the disclosure to which a bracket is applied. In the following description, the descriptions of the configuration and the structure described above are omitted.

As shown in Figure 53, when the front substrate 101 includes the portion extending further than the back substrate 111 in the horizontal direction (i.e., the first direction DR1 and/or the second direction DR2) in the area around the second long side LS2 of the display panel 100, a bracket 1100 may be disposed in an exposed portion of the front substrate 101. An adhesive layer 1110 may be formed between the front substrate 101 and the bracket 1100 to attach the bracket 1100 to the front substrate 101. Further, the bracket 1100 may include a depression 1101 for providing a space for the adhesive layer 1110.

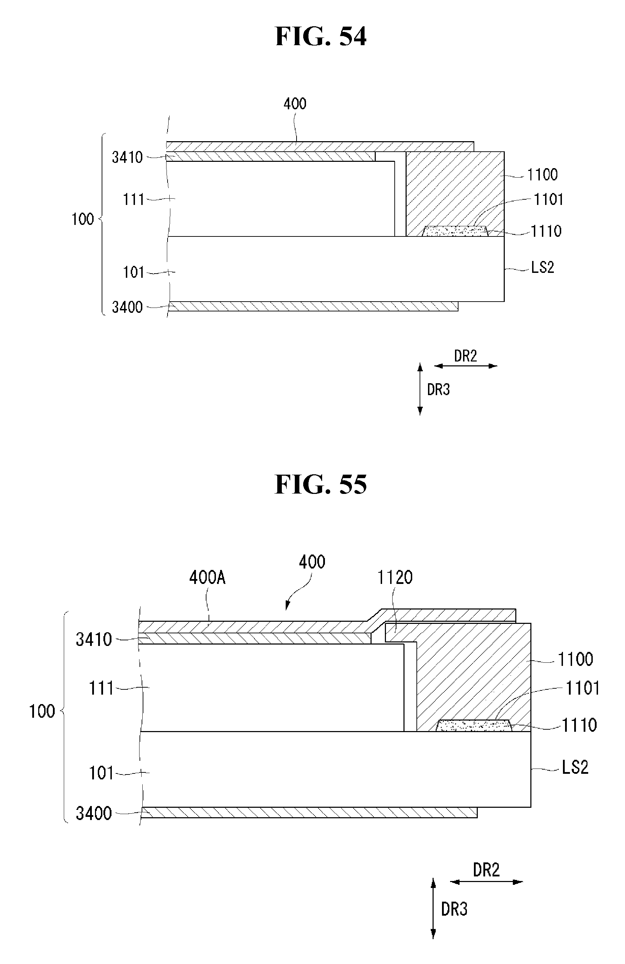

The bracket 1100 may be separated from the side of the back substrate 111 by a predetermined distance W6 in the horizontal direction (i.e., the first direction DR1 and/or the second direction DR2). As shown in Figure 54, the supporting film 400 may include a portion attached to an upper part of the bracket 1100. Further, the supporting film 400 may cover a space between the bracket 1100 and the front substrate 101. As shown in Figure 55, the bracket 1100 may include a portion 1120 positioned between the supporting film 400 and the back substrate 111.

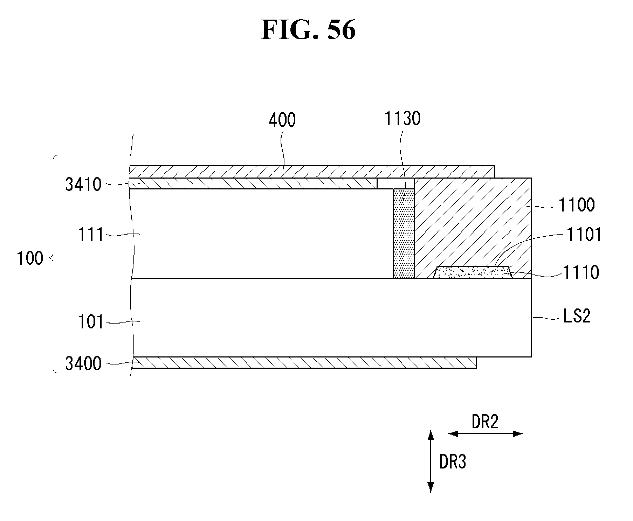

As shown in Figure 56, a buffer 1130 may be disposed between the bracket 1100 and the back substrate 111. The buffer 1130 may contain a material having elasticity and may prevent a damage resulting from a collision between the bracket 1100 and the back substrate 111.

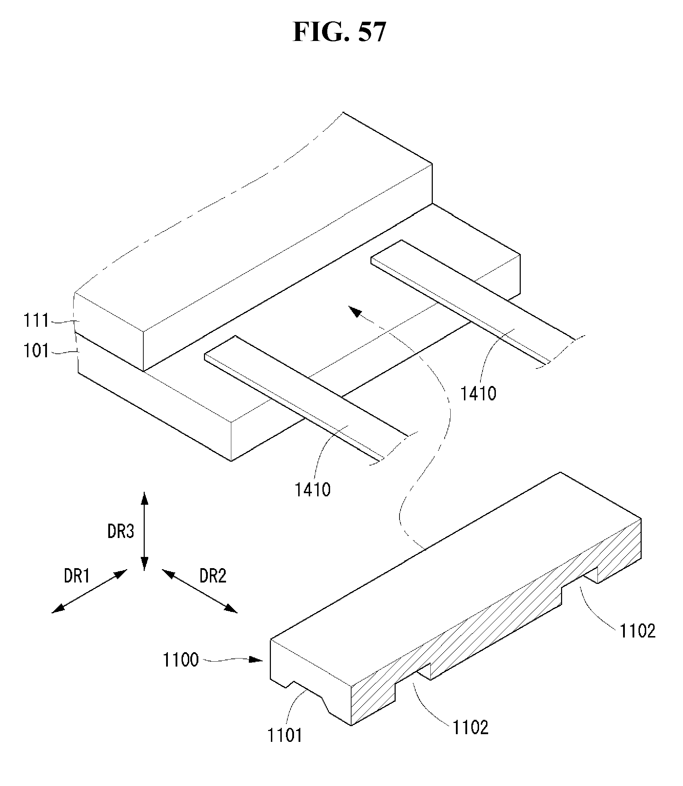

As shown in Figure 57, a pad electrode may be formed on the front substrate 101, and a connection substrate 1410 may be electrically connected to the pad electrode. The bracket 1100 may cover the connection substrate 1410. Hence, the connection substrate 1410 may include a portion positioned between the bracket 1100 and the front substrate 101 while being electrically connected to the pad electrode.

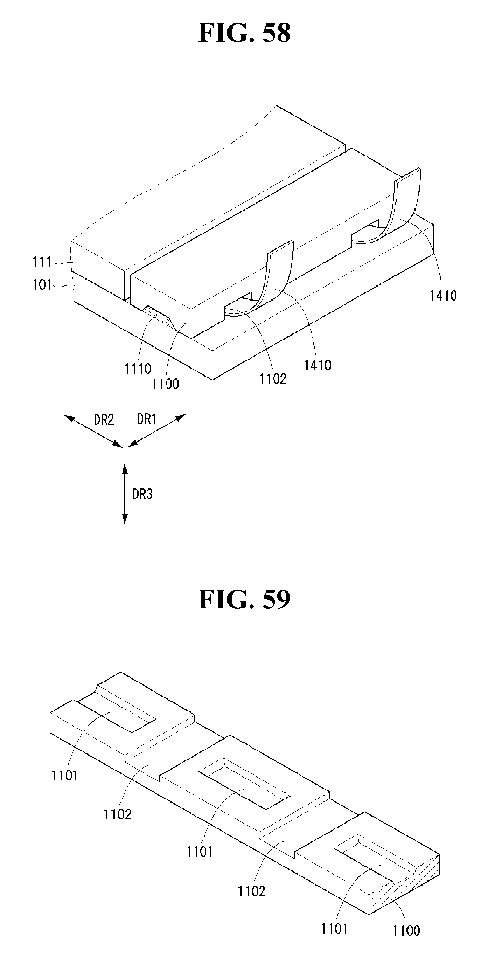

The bracket 1100 may include a groove 1102 through which the connection substrate 1410 passes. Moreover, the bracket 1100 may have a bar shape extending in the first direction DR1. As shown in Figure 58, the connection substrate 1410 may pass through the groove 1102 of the bracket 1100 and may travel toward the back substrate 111 in a state where the bracket 1100 is connected to the front substrate 101.

As shown in Figure 59, the groove 1102 of the bracket 1100, through which the connection substrate 1410 passes, may cross across the depression 1101, to which the adhesive layer 1110 is applied. In other words, each of the depression 1101 and the adhesive layer 1110 may be divided into a plurality of parts by the groove 1102. In the embodiment of the disclosure, the depression 1101, to which the adhesive layer 1110 is applied, may be referred to as a first groove, and the groove 1102, through which the connection substrate 1410 passes, may be referred to as a second groove.

Figures 60 to 70 illustrate configuration of a display device according to the embodiment of the disclosure. In the following description, the descriptions of the configuration and the structure described above are omitted. A display panel 100, an optical layer 110, a frame 1600, and a supporting film 400 were described in detail above.

As shown in Figure 60, a display device 10 according to the embodiment of the disclosure may include a cover 130. The cover 130 may include a side cover 130V and a back cover 130H. The side cover 130V and the back cover 130H may form one body. For example, the cover 130 including the side cover 130V and the back cover 130H may be formed using an extrusion molding method.

The back cover 130H of the cover 130 may include a portion positioned in the rear of the frame 1600, and the side cover 130V of the cover 130 may include a portion positioned on the side of the display panel 100 and the side of the optical layer 110. The cover 130 may prevent a foreign material, such as dust, from entering into the display device 10 and may protect the display panel 100 from damage.

As described above, an edge of the front surface of the display panel 100 may be exposed in a state where the cover 130 is disposed. In the embodiment of the disclosure, the exposure of the edge of the front surface of the display panel 100 may mean that an edge of a front surface of the front polarizing film 3400 attached to the front substrate 101 of the display panel 100 is exposed. Alternatively, the exposure of the edge of the front surface of the display panel 100 may mean that an edge of a front surface of the front substrate 101 is exposed.

In this instance, when an observer in the front of the display panel 100 watches the display panel 100, the observer may observe most of the edge of the front surface of the display panel 100. Therefore, an attractive appearance of the display device may be provided. Further, a visual effect, in which the observer may feel that the screen size of the display panel 100 is greater than the real screen size of the display panel 100, may be obtained.

The side cover 130V of the cover 130 may be separated from the display panel 100 by a predetermined distance in the horizontal direction (i.e., the first direction DR1 and/or the second direction DR2).

Further, the side cover 130V may include a portion provided farther from the supporting film 400 as it goes to its back part. In other words, as the side cover 130V goes to its back part, the side cover 130V may include a portion far from the middle of the display device 10. Namely, supposing that a line passing through the middle of the display panel 100 in a vertical direction is a first line, the side cover 130V may include a portion far from the first line as it goes to a back part of the display device 10.

For example, as shown in Figure 60, a distance X1 between the supporting film 400 and the side cover 130V in an area adjacent to the back polarizing film 3410 in the horizontal direction (i.e., the first direction DR1 and/or the second direction DR2) may be less than a distance X2 between the supporting film 400 and the side cover 130V in an area adjacent to the frame 1600 in the horizontal direction (i.e., the first direction DR1 and/or the second direction DR2).

Further, a distance X3 between the front substrate 101 and the side cover 130V in the horizontal direction (i.e., the first direction DR1 and/or the second direction DR2) may be less than a distance X4 between the back substrate 111 and the side cover 130V in the horizontal direction (i.e., the first direction DR1 and/or the second direction DR2).

In this instance, even if the optical layer 110 or the supporting film 400 expands depending on the temperature change, the optical layer 110 and/or the supporting film 400 may be prevented from colliding with the side cover 130V.

Further, a distance between the display panel 100 and the side cover 130V may be less than a distance between the supporting film 400 and the side cover 130V in the horizontal direction (i.e., the first direction DR1 and/or the second direction DR2). For example, the distances X1 and X2 between the supporting film 400 and the side cover 130V may be greater than the distance X3 between the front substrate 101 and the side cover 130V and the distance X4 between the back substrate 111 and the side cover 130V in the horizontal direction (i.e., the first direction DR1 and/or the second direction DR2).

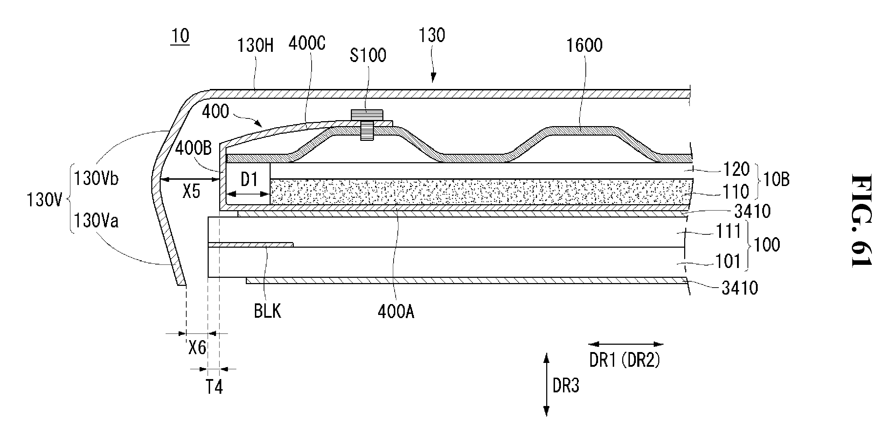

As shown in Figure 61, the side cover 130V may include a portion, which is provided farther from the middle of the display device 10 and again approaches the middle of the display device 10, as it goes to its back part. For example, the side cover 130V may include a first side part 130Va and a second side part 130Vb. The second side part 130Vb may be positioned between the first side part 130Va and the back cover 130H.

The first side part 130Va may travel in a direction farther away from the middle of the display device 10 as it goes to a back part of the display device 10. The second side part 130Vb may travel in a direction closer toward the middle of the display device 10 as it goes to the back part of the display device 10. Hence, a shortest distance X6 between the display panel 100 and the first side part 130Va may be less than a distance X5 between a connection part between the first side part 130Va and the second side part 130Vb and the supporting film 400 in the horizontal direction (i.e., the first direction DR1 and/or the second direction DR2).

The first side part 130Va may overlap the display panel 100 in the horizontal direction (i.e., the first direction DR1 and/or the second direction DR2). The second side part 130Vb may overlap the frame 1600 in the horizontal direction (i.e., the first direction DR1 and/or the second direction DR2). The connection part between the first side part 130Va and the second side part 130Vb may overlap at least one of the optical layer 110, the light source part 120, or the frame 1600 in the horizontal direction (i.e., the first direction DR1 and/or the second direction DR2).

The shortest distance X6 between the display panel 100 and the first side part 130Va in the horizontal direction (i.e., the first direction DR1 and/or the second direction DR2) may be sufficiently secured, so that the side of the display panel 100 does not collide with the first side part 130Va. For example, the shortest distance X6 between the display panel 100 and the first side part 130Va in the horizontal direction (i.e., the first direction DR1 and/or the second direction DR2) may be greater than a distance T4 between the end of the display panel 100 and the first part 400A of the supporting film 400.

Alternatively, the shortest distance X6 between the display panel 100 and the first side part 130Va in the horizontal direction (i.e., the first direction DR1 and/or the second direction DR2) may be greater than the distance D1 between the supporting film 400 and the end of the optical layer 110 in the horizontal direction (i.e., the first direction DR1 and/or the second direction DR2).

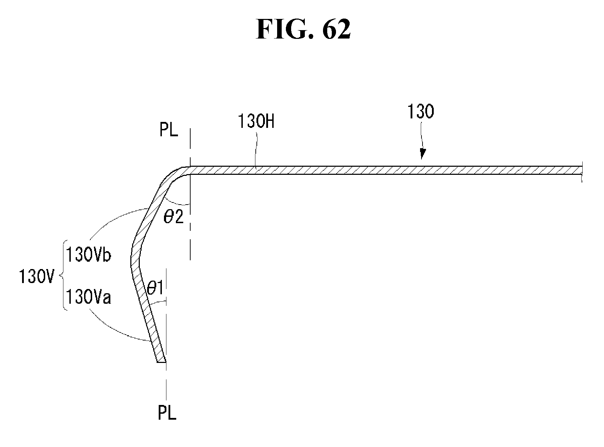

As shown in Figure 62, the first side part 130Va may be inclined at a first angle θ1 based on a line PL vertical to the display panel 100. Further, the second side part 130Vb may be inclined at a second angle θ2 based on the line PL.

The first angle θ1 may be set to a sufficiently small value, so as to prevent the observer watching the image in the front of the display device 10 from perceiving the size of the bezel area being relatively large. On the other hand, because the observer generally watches the image in the rear of the display device 10 and because the second side part 130Vb is obscured from view by the first side part 130Va, it may not matter that the second angle θ2 has a relatively larger value. Hence, the first angle θ1 may be less than the second angle θ2.

When the first angle θ1 is excessively small, the supporting film 400 may collide with the side cover 130V in a manufacturing process of the display device 10, or the supporting film 400 may collide with the side cover 130V depending on the temperature change. Hence, the first angle θ1 may be about 5 ° to 8 °.

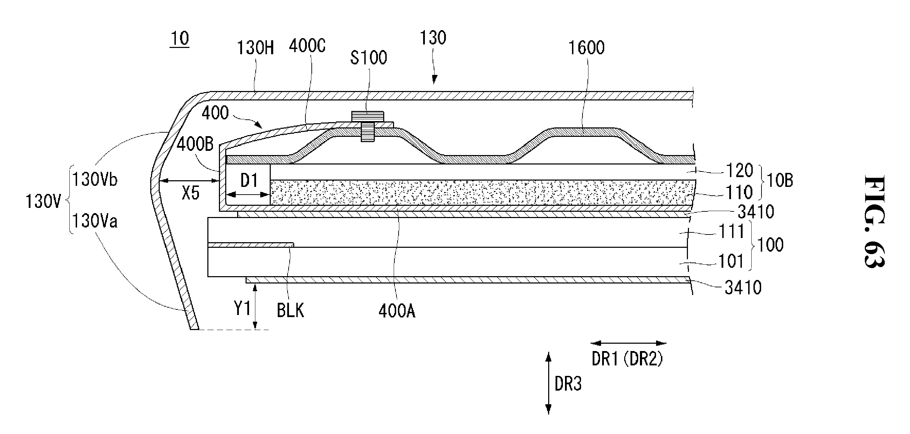

As shown in Figure 63, an end of the side cover 130V (i.e., an end of the first side part 130Va) may extend further than the front surface of the display panel 100 by a predetermined length Y1 in the vertical direction (i.e., the third direction DR3). In this instance, the display panel 100 may be more efficiently protected. Even in such a structure, at least one edge of the display panel 100 may be exposed.

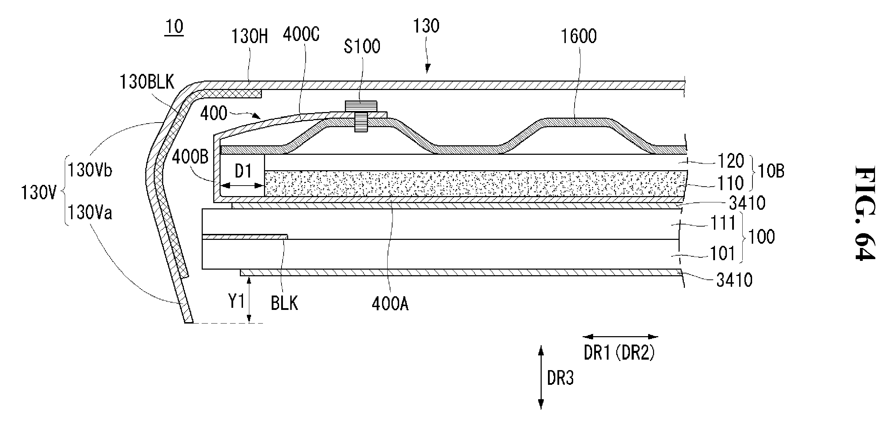

As shown in Figure 64, a buffer 130BLK having elasticity may be disposed between the side cover 130V and the display panel 100. The buffer 130BLK may contain a material having elasticity. For example, the buffer 130BLK may contain a sponge material. The buffer 130BLK may prevent the side of the display panel 100 from being damaged by a collision between the side cover 130V and the side of the display panel 100.

Further, the buffer 130BLK may contain a material capable of absorbing light so as to prevent the reflection of light. For example, the buffer 130BLK may have a black color or the like. The buffer 130BLK may be attached to an inner surface of the side cover 130V. For this, the buffer 130BLK may be implemented as a tape and may be attached to an inner surface of the side cover 130V.

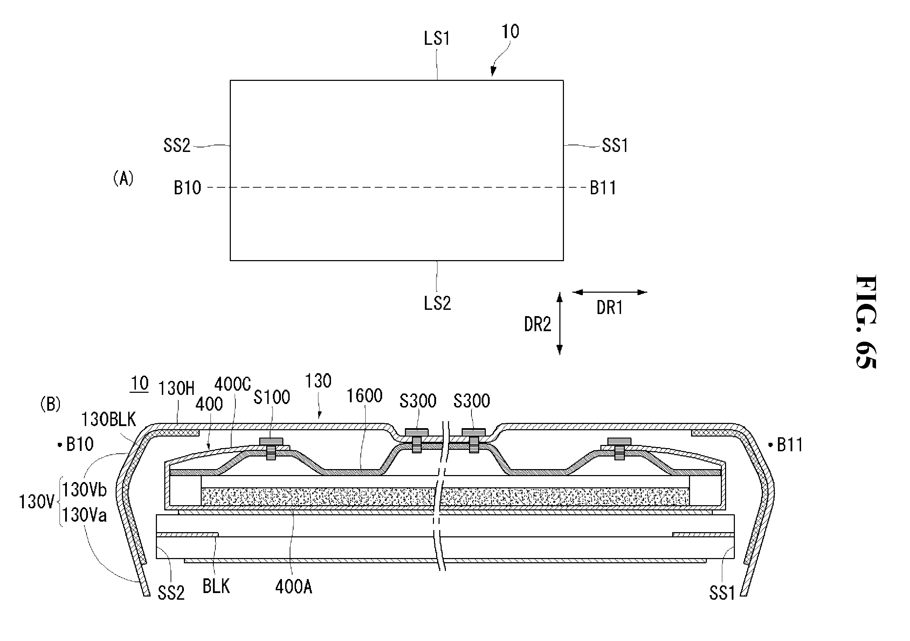

As shown in (B) of Figure 65 which is a cross-sectional view taken along line B10-B11 (i.e., the long sides LS1 and LS2 of the display device 10) of (A) of Figure 65, the side cover 130V may be disposed in areas around the first short side SS1 and the second short side SS2 of the display panel 100. The back cover 130H of the cover 130 may be fastened to the frame 1600 through a third fastening member S300. As shown in Figure 65, the edge of the front surface of the display panel 100 may be exposed through each of the first short side SS1 and the second short side SS2 of the display device 10.

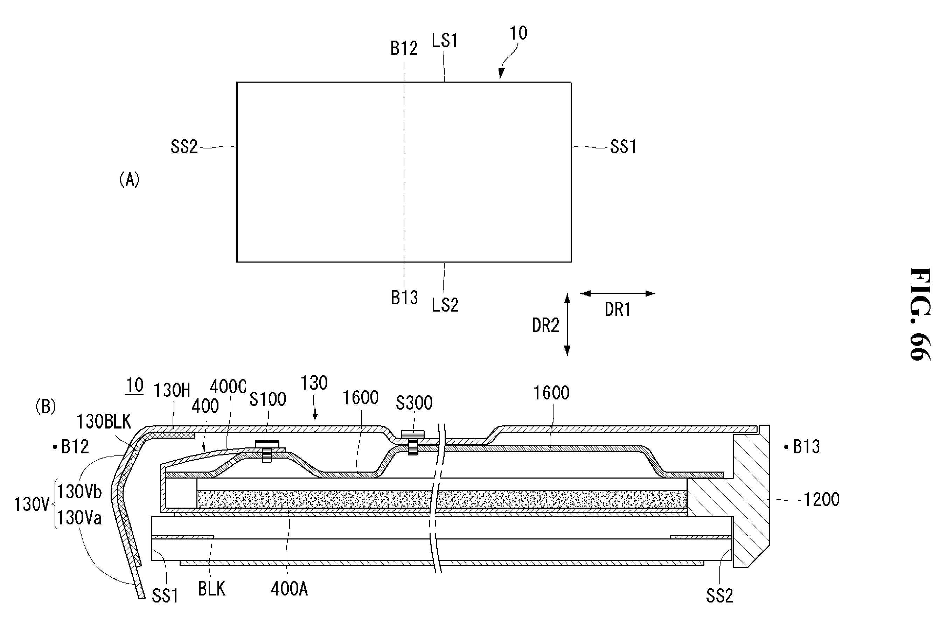

As shown in (B) of Figure 66 which is a cross-sectional view taken along line B12-B13 (i.e., the short sides SS1 and SS2 of the display device 10) of (A) of Figure 66, the side cover 130V may be disposed in the area around the first long side LS1 of the display panel 100, and a bottom cover 1200 may be disposed in the area around the second long side LS2 of the display panel 100. The bottom cover 1200 may support at least one of the display panel 100, the backlight unit 10B, and the frame 1600. The bottom cover 1200 may be connected to at least one of the back cover 130H and the frame 1600.

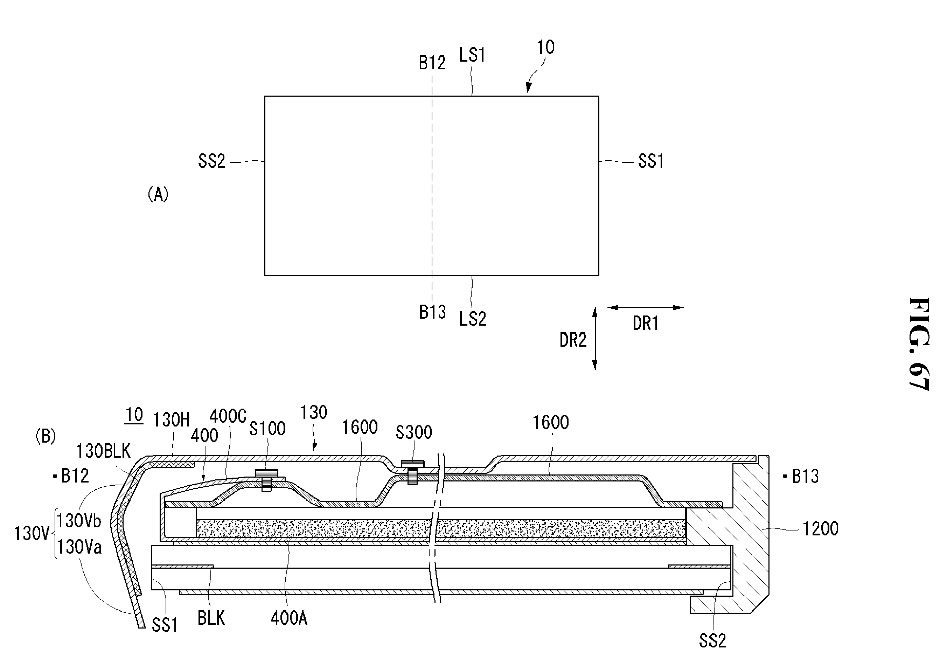

As shown in Figure 66, the edge of the front surface of the display panel 100 may be exposed through each of the first long side LS1 and the second long side LS2 of the display device 10. Alternatively, as shown in Figure 67, the edge of the front surface of the display panel 100 may be covered by the bottom cover 1200 in an area around the second long side LS2 of the display device 10.

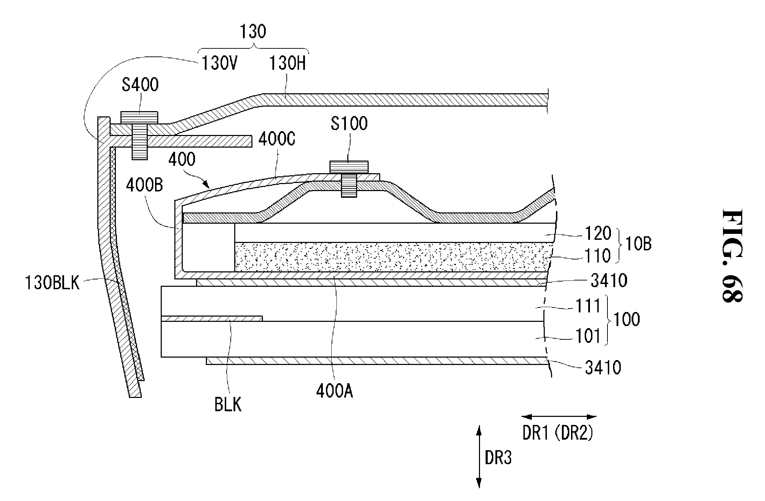

The side cover 130V and the back cover 130H of the cover 130 may be separated from each other. For example, as shown in Figure 68, the side cover 130V and the back cover 130H may be fastened to each other through a fourth fastening member S400. Even in this instance, the side cover 130V may include a portion provided farther from the middle of the display device 10 as it goes to its back part.

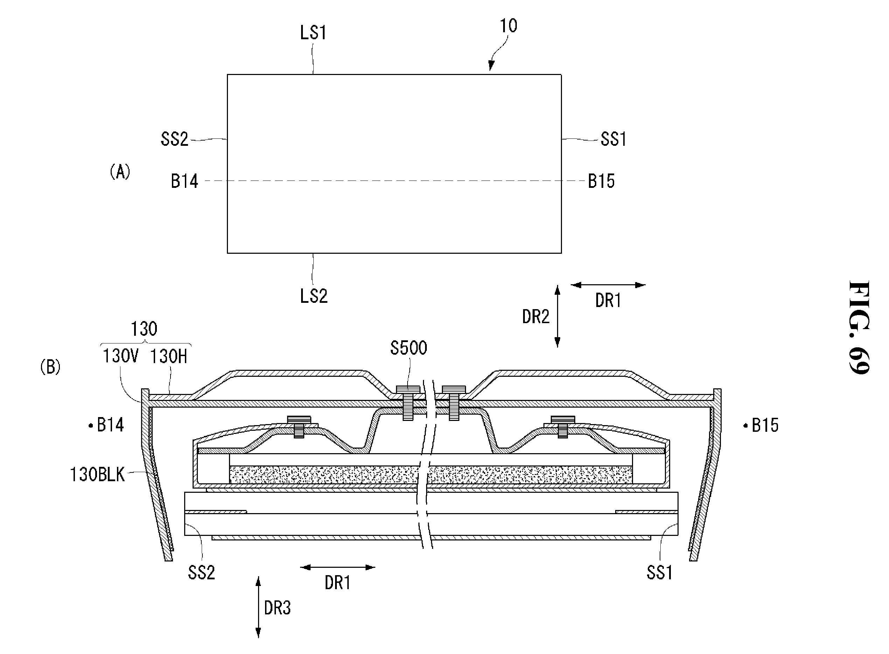

As shown in (B) of Figure 69 which is a cross-sectional view taken along line B14-B15 (i.e., the long sides LS1 and LS2 of the display device 10) of (A) of Figure 69, the side cover 130V may be disposed in areas around the first short side SS1 and the second short side SS2 of the display panel 100. The back cover 130H, the side cover 130V, and the frame 1600 may be fastened to one another through a fifth fastening member S500.

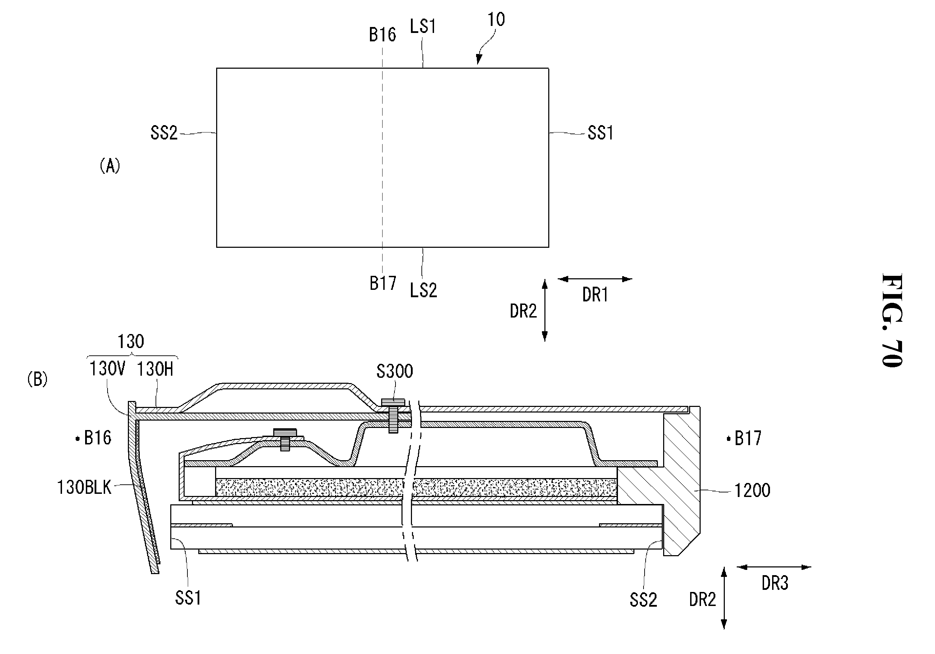

As shown in (B) of Figure 70 which is a cross-sectional view taken along line B16-B17 (i.e., the short sides SS1 and SS2 of the display device 10) of (A) of Figure 70, the side cover 130V may be disposed in the area around the first long side LS1 of the display panel 100, and the bottom cover 1200 may be disposed in the area around the second long side LS2 of the display panel 100.

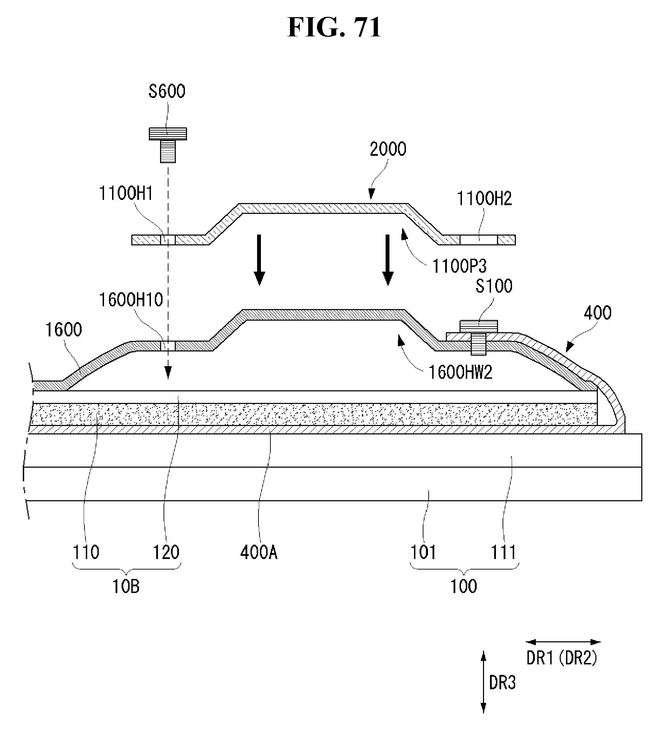

Figures 71 to 80 illustrate another method for connecting the supporting film to the frame. In the following description, the descriptions of the configuration and the structure described above are omitted.

As shown in Figure 71, the display device 10 according to the embodiment of the disclosure may include a pressure plate 2000 connected to the frame 1600. The first fastening member S100 may fasten the supporting film 400 to the frame 1600. A sixth fastening member S600 may fasten the pressure plate 2000 to the frame 1600.

For this, the pressure plate 2000 may include a first pressure hole 1100H1, and the frame 1600 may include a tenth frame hole 1600H10. The sixth fastening member S600 may pass through the first pressure hole 1100H1 and the tenth frame hole 1600H10 to fasten the pressure plate 2000 to the frame 1600.

The pressure plate 2000 may further include second pressure holes 1100H2. The second pressure holes 1100H2 may correspond to the first fastening member S100. Namely, the first fastening member S100 may include a portion positioned inside the second pressure hole 1100H2. Preferably, a head part of the first fastening member S100 may be positioned inside the second pressure hole 1100H2.

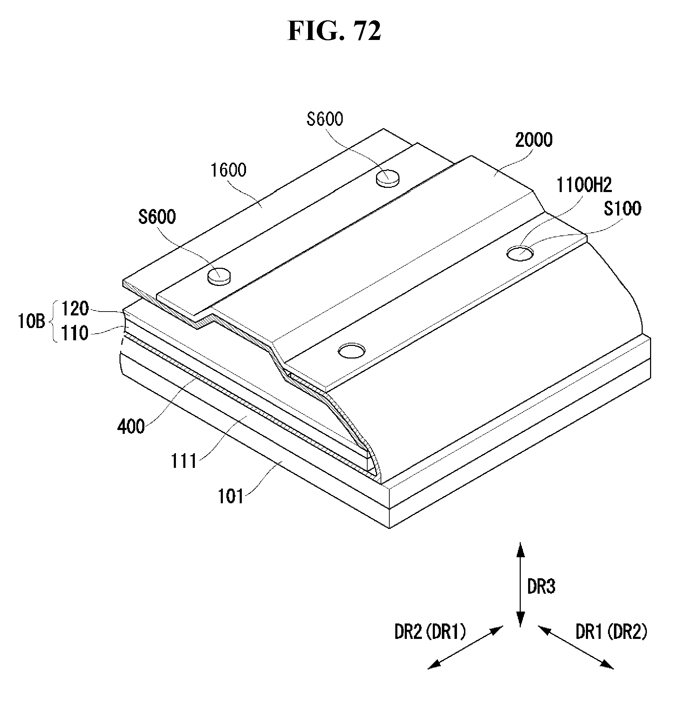

As shown in Figure 72, the pressure plate 2000 may apply a pressure to the supporting film 400, thereby firmly fixing the supporting film 400. Further, the supporting film 400 may include a portion positioned between the pressure plate 2000 and the frame 1600.

As shown in Figure 72, the first fastening member S100 may be exposed through the second pressure hole 1100H2. In this instance, a diameter of the second pressure hole 1100H2 may be greater than a diameter of the head part of the first fastening member S100.

The pressure plate 2000 may include a depression 1100P3 which is depressed in a direction far from the display panel 100 or the frame 1600. The frame 1600 may include a depression 1600HW2 corresponding to the depression 1100P3 of the pressure plate 2000. The depression 1600HW2 may be depressed in a direction that extends away from the display panel 100. If the supporting film 400 is disposed between the depression 1100P3 of the pressure plate 2000 and the depression 1600HW2 of the frame 1600, the supporting film 400 may be more efficiently supported.

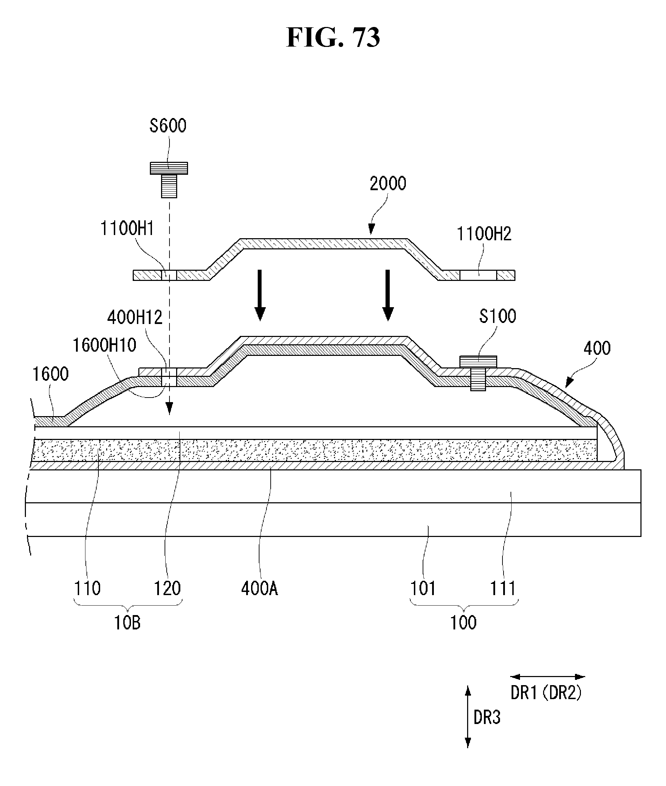

The frame 1600, the supporting film 400, and the pressure plate 2000 may be fastened to one another through a predetermined fastening member. For example, as shown in Figure 73, the pressure plate 2000 may include the first pressure hole 1100H1, the supporting film 400 may include a twelfth film hole 400H12 corresponding to the first pressure hole 1100H1, and the frame 1600 may include the tenth frame hole 1600H10. In this instance, the sixth fastening member S600 may pass through the first pressure hole 1100H1, the twelfth film hole 400H12, and the tenth frame hole 1600H10 to fasten the frame 1600, the supporting film 400, and the pressure plate 2000.

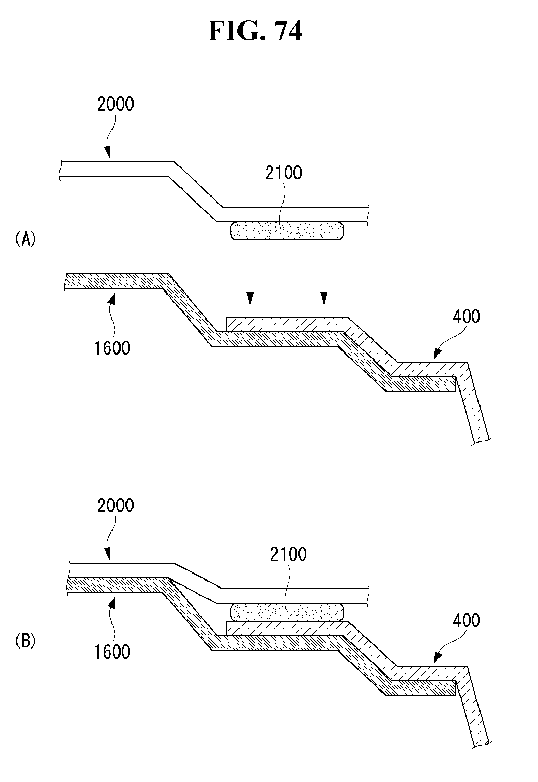

As shown in (A) of Figure 74, the pressure plate 2000 may be coupled with the frame 1600 in a state where a buffer 2100 is attached to the pressure plate 2000. Hence, as shown in (B) of Figure 74, the buffer 2100 may uniformly press the supporting film 400. The buffer 2100 may contain a material having the elasticity and the flexibility. For example, the buffer 2100 may contain a silicon material and a sponge material.

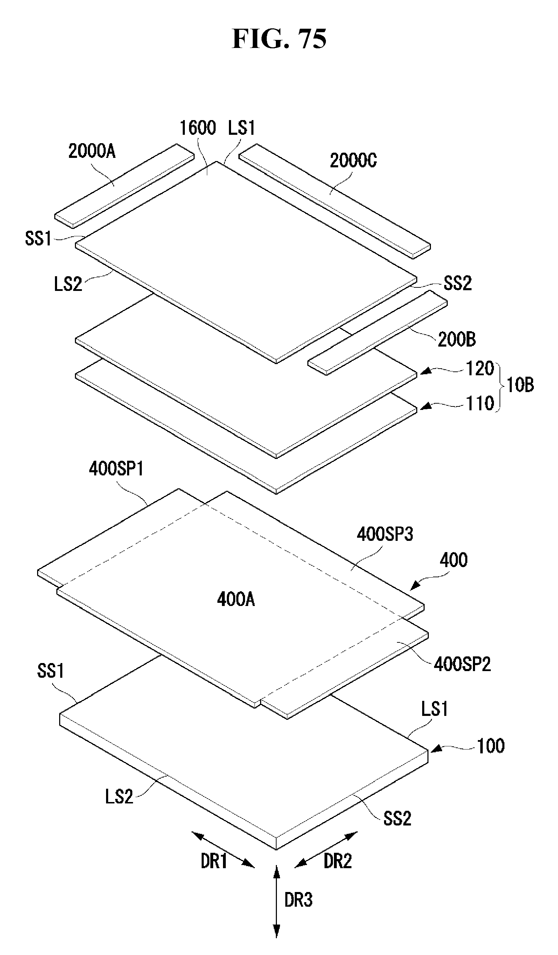

The pressure plate 2000 may be divided into a plurality of parts. For example, as shown in Figure 75, the pressure plate 2000 may include a first pressure plate 2000A corresponding to the 3-1 part 400C1 of the supporting film 400, a second pressure plate 2000B corresponding to the 3-2 part 400C2 of the supporting film 400, and a third pressure plate 2000C corresponding to the 3-3 part 400C3 of the supporting film 400.

The first pressure plate 2000A may press the part 400C1 of the supporting film 400, the second pressure plate 2000B may press the part 400C2 of the supporting film 400, and the third pressure plate 2000C may press the part 400C3 of the supporting film 400.

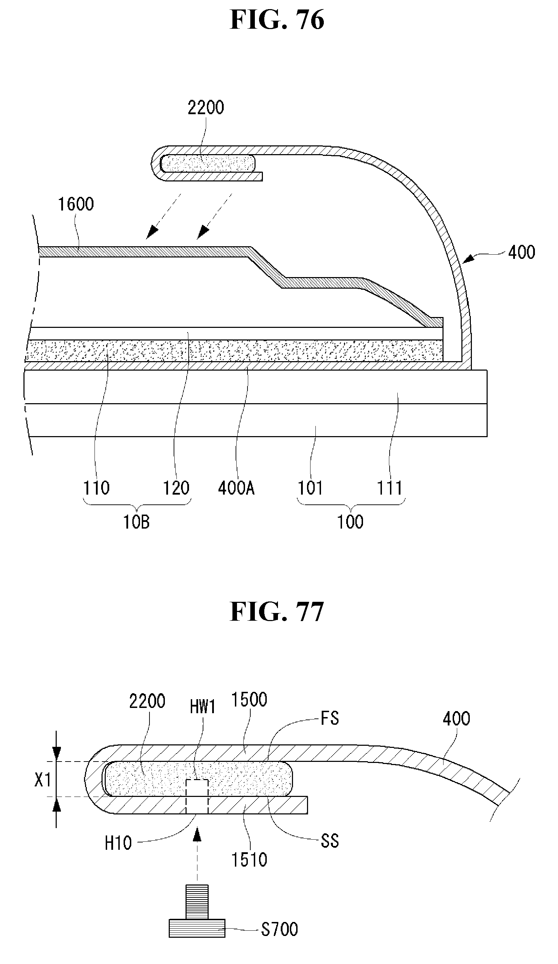

As shown in Figure 76, the display device 10 according to the embodiment of the disclosure may further include a rolling plate 2200. The supporting film 400 may surround the rolling plate 2200. Further, the rolling plate 2200 may be connected to the frame 1600. More specifically, the rolling plate 2200 may be connected to the frame 1600 in a state where the rolling plate 2200 is surrounded by the supporting film 400.

As shown in Figure 77, as the rolling plate 2200 is surrounded by the supporting film 400, the supporting film 400 may include a first connection portion 1500 positioned on a first surface FS of the rolling plate 2200 and a second connection portion 1510 positioned on a second surface SS opposite the first surface FS of the rolling plate 2200. When the rolling plate 2200 has a sufficient thickness X1, the rolling plate 2200 may include a groove HW1. The supporting film 400 may include a tenth hole H10 corresponding to the groove HW1 of the rolling plate 2200.

A seventh fastening member S700 may be inserted into the tenth hole H10 of the supporting film 400 and the groove HW1 of the rolling plate 2200, thereby fastening the rolling plate 2200 to the supporting film 400. More specifically, the seventh fastening member S700 may fasten the rolling plate 2200 to the second connection portion 1510 of the supporting film 400 on the second surface SS of the rolling plate 2200.

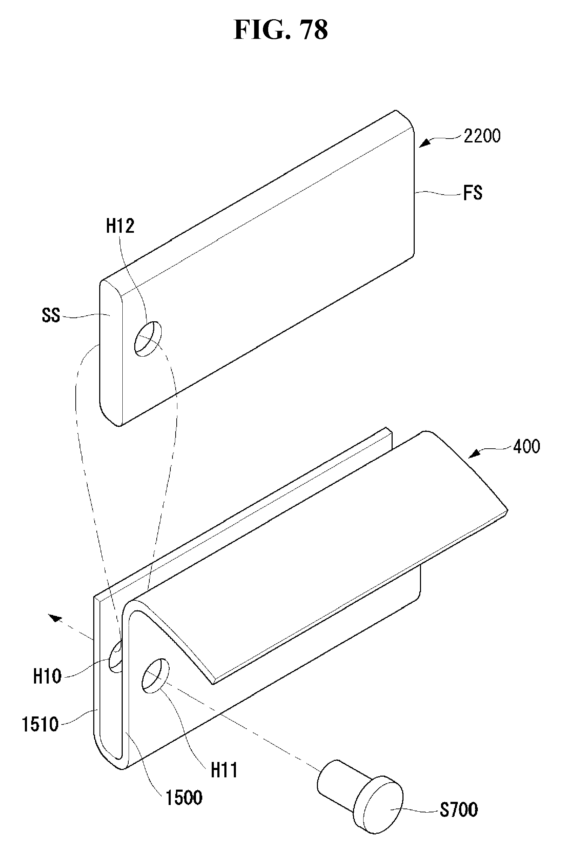

Alternatively, as shown in Figure 78, the rolling plate 2200 may include a twelfth hole H12, the first connection portion 1500 of the supporting film 400 may include an eleventh hole H11, and the second connection portion 1510 of the supporting film 400 may include a tenth hole H10.

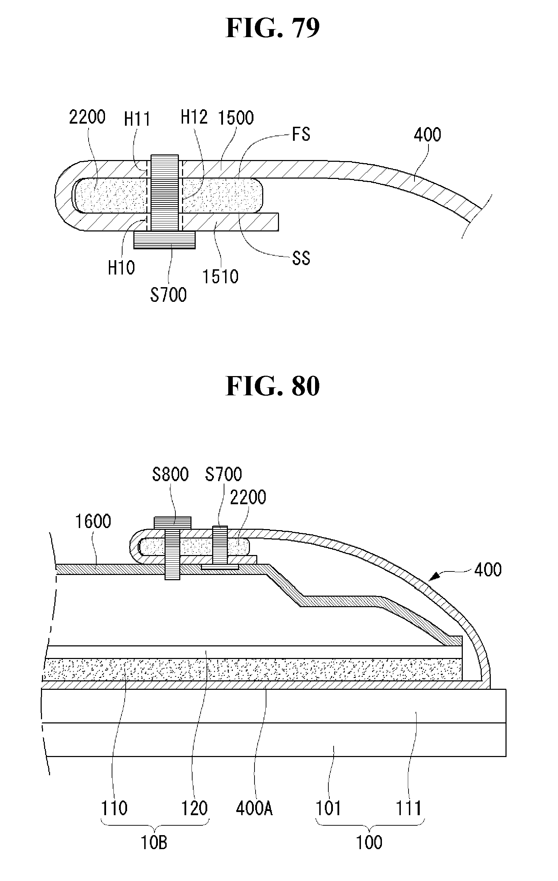

As shown in Figure 79, the seventh fastening member S700 may pass through the tenth hole H10, the twelfth hole H12, and the eleventh hole H11, thereby fastening the first connection portion 1500 of the supporting film 400, the rolling plate 2200, and the second connection portion 1510 of the supporting film 400.

In this instance, a head part of the seventh fastening member S700 may be positioned adjacent to the second connection portion 1510 of the supporting film 400. Hence, as shown in Figure 80, the head part of the seventh fastening member S700 may be positioned between the rolling plate 2200 and the frame 1600. Further, the display device 10 according to the embodiment of the disclosure may further include an eighth fastening member S800 for fastening the frame 1600, the supporting film 400, and the rolling plate 2200.

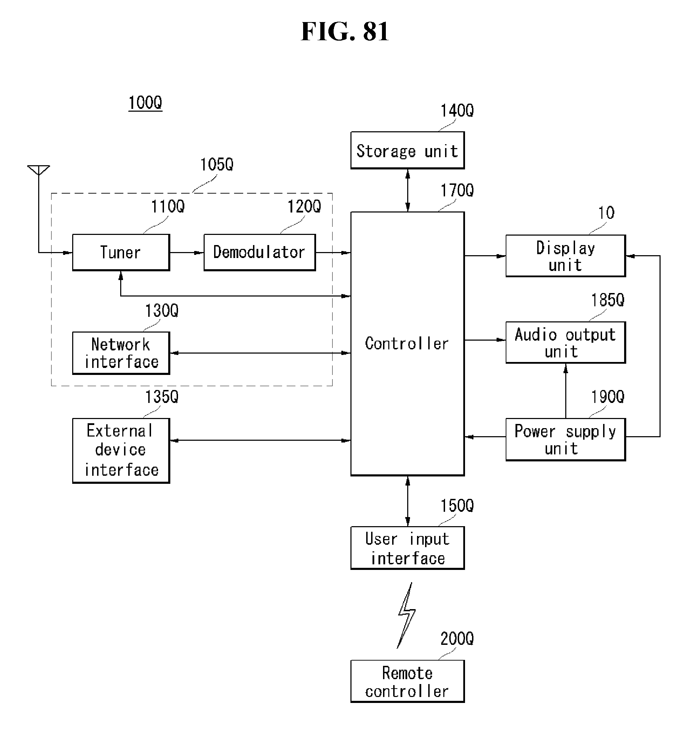

Figure 81 illustrates another configuration of a display device according to an exemplary embodiment of the disclosure. In the following description, the descriptions of the configuration and the structure described above are omitted. Hereinafter, a broadcasting signal receiver is used as an electronic device, to which the display device according to the embodiment of the disclosure is applied. The display device according to the embodiment of the disclosure may be applied to other electronic devices such as cell phones.

A display unit 10 shown in Figure 81 may correspond to the display device shown in Figures 1 to 80. Thus, the display device according to the embodiment of the disclosure may be referred to as the display unit 10 shown in Figure 81.

As shown in Figure 81, a broadcasting signal receiver 100Q according to the embodiment of the disclosure may include a broadcasting receiving unit 105Q, an external device interface 135Q, a storage unit 140Q, a user input interface 150Q, a controller 170Q, a display unit 10, an audio output unit 185Q, a power supply unit 190Q, and a photographing unit (not shown). The broadcasting receiving unit 105Q may include a tuner 110Q, a demodulator 120Q, and a network interface 130Q.

If necessary, the broadcasting signal receiver 100Q may be designed so that it includes the tuner 110Q and the demodulator 120Q and does not include the network interface 130Q. On the contrary, the broadcasting signal receiver 100Q may be designed so that it includes the network interface 130Q and does not include the tuner 110Q and the demodulator 120Q. It should be appreciated that other configurations are possible based on the intended application and desired functions of the display unit 10.

The tuner 110Q tunes a radio frequency (RF) broadcasting signal, which corresponds to a channel selected by the user or all of previously stored channels, among RF broadcasting signals received through an antenna. Further, the tuner 110Q converts the tuned RF broadcasting signal into a middle frequency signal, a base band image signal, or a voice signal.

The demodulator 120Q receives a digital IF signal converted by the tuner 110Q and performs a demodulating operation. A stream signal output by the demodulator 120Q may be input to the controller 170Q. The controller 170Q performs demultiplexing, image/voice signal processing, etc. Then, the controller 170Q outputs an image to the display unit 10 and outputs a voice to the audio output unit 185Q.

The external device interface 135Q may connect an external device to the broadcasting signal receiver 100Q. For this, the external device interface 135Q may include an audio-visual (AV) input/output unit (not shown) or a wireless communication unit.

The network interface 130Q provides an interface for connecting the broadcasting signal receiver 100Q to a wired/wireless network including an internet network. The network interface 130Q may correspond to the wireless communication unit, which was described in detail above.

The storage unit 140Q may store a program for the signal processing of the controller 170Q and the control operation of the controller 170Q or may store the processed image signal, the processed voice signal, or a data signal.

The user input interface 150Q may transfer the signal the user inputs to the controller 170Q, or may transfer the signal from the controller 170Q to the user. For example, the user input interface 150Q may receive and process the control signal indicating the turn-on or turn-off operation, the channel selection, the screen setting, etc. from a remote controller 200Q based on various communication manners such as a RF communication manner and an infrared communication manner. Alternatively, the user input interface 150Q may operate so that the control signal from the controller 170Q is transmitted to the remote controller 200Q. For example, the user input interface 150Q may transfer a control signal, which is input from a power key, a channel key, a volume key, a local key, etc., to the controller 170Q.

The controller 170Q may perform the demultiplexing processing on the stream input through the tuner 110Q, the demodulator 120Q, or the external device interface 135Q or may perform the processing of demultiplexed signals, thereby generating or outputting the signals for outputting the image or the voice.

The image signal processed by the controller 170Q may be input to the display unit 10 and may display an image corresponding to the image signal. Further, the image signal processed by the controller 170Q may be input to an external output device through the external device interface 135Q.

The voice signal processed by the controller 170Q may be output to the audio output unit 185Q. Further, the voice signal processed by the controller 170Q may be input to the external output device through the external device interface 135Q.

The controller 170Q may control the entire operation of the broadcasting signal receiver 100Q. For example, the controller 170Q may control the tuner 110Q, so that the tuner 110Q tunes a RF broadcasting signal corresponding to a channel selected by the user or a previously stored channel. The controller 170Q may control the broadcasting signal receiver 100Q using a user command or an internal program input through the user input interface 150Q.

The display unit 10 may convert the image signal, the data signal, and an OSD signal, which are processed by the controller 170Q, or the image signal and the data signal which are received from the external device interface 135Q, into red, green, and blue signals and may generate a driving signal.

The audio output unit 185Q may receive the voice signal (for example, stereo signal, 3.1 channel signal, or 5.1 channel signal) processed by the controller 170Q and may output the voice.

The power supply unit 190Q supplies the power required in all of the components of the broadcasting signal receiver 100Q.

The remote controller 200Q transmits the user command the user inputs to the user input interface 150Q. For this, the remote controller 200Q may use Bluetooth, RF communication, infrared communication, Ultra-wideband (UWB), Zigbee, etc. The remote controller 200Q may receive the image, the voice, or the data signal output from the user input interface 150Q and may display the image, the voice, or the data signal or may output the voice or the vibration.

The broadcasting signal receiver 100Q may not include the tuner 110Q and the demodulator 120Q. Further, the broadcasting signal receiver 100Q may receive image contents through the network interface 130Q or the external device interface 135Q and may reproduce the image contents.

As broadly described and embodied herein, a display device may include a display panel including a front substrate and a back substrate; a frame provided behind the display panel; a supporting film provided between the display panel and the frame, the supporting film being connected to a rear surface of the display panel and to the frame; and an optical layer provided between the supporting film and the frame. The supporting film may extend from the display panel to the frame such that the supporting film is provided a prescribed distance from an edge of the optical layer in a first direction parallel to a front surface of the display panel.

The display panel further may include a front polarizing film attached to a front surface of the front substrate and a back polarizing film attached to a rear surface of the back substrate. A first surface of the back polarizing film may be attached to the rear surface of the back substrate. Moreover, the supporting film may be attached to a second surface of the back polarizing film opposite the first surface.

A width of the back polarizing film may be greater than a width of the optical layer in the first direction. The supporting film may include a first region and a second region provided adjacent to the first region in the first direction, wherein a groove is provided on the supporting film between the first region and the second region, the supporting film being bent at the groove. A width of the first region may be greater than a width of the back polarizing film in the first direction, and the width of the back polarizing film may be greater than a width of the optical layer in the first direction.

The supporting film may include a third region provided adjacent the second region in the first direction, the third region being connected to the frame. A groove may be provided between the second region and the third region, the supporting film being bent at the groove. Moreover, the third region may include at least one hole through which a fastening member is provided to fasten the third region to the frame.

In this embodiment, a resin layer may be provided between the supporting film and the back substrate of the display panel, the resin layer contacting an end of the back polarizing film. The resin layer may include a portion that protrudes farther than the supporting film in the first direction away from a center of the display panel.

The display panel may include a first short side, a second short side opposite the first short side, a first long side adjacent to the first short side and the second short side, and a second long side opposite the first long side, wherein the resin layer includes a first resin layer corresponding to the first short side, and a second resin layer corresponding to the second short side. The resin layer may include a third resin layer corresponding to the first long side.

An opaque layer may be provided between the front substrate and the back substrate of the display panel, wherein the opaque layer is provided along an outer portion of the display panel and spatially overlaps the optical layer in a second direction perpendicular to the front surface of the display panel.

The opaque layer may include a first end and a second end opposite the first end, wherein the second end is provided toward an outer edge of the display panel and the first end is provided toward a center of the display panel. Moreover, a distance between the first end of the opaque layer and the edge of the optical layer in the first direction is less than the prescribed distance between the supporting film and the optical layer in the first direction.

In this embodiment, a width of the frame may be greater than a width of the optical layer in the first direction. Moreover, the display device may include a back cover provided behind the frame, and a side cover provided lateral to the display panel. The side cover may be angled relative to the display panel such that the side cover is closer to the display panel near the front surface of the display panel than near the back cover. The back cover and the side cover may be coupled to each other using a fastening member, or the back cover and the side cover may be integrally formed as a single body.

An end of the side cover may protrude beyond the front surface of the display panel in a second direction perpendicular to the front surface. A distance between the display panel and the side cover may be less than a distance between the supporting film and the side cover in the first direction. Moreover, a buffer material having a prescribed elasticity may be provided between the display panel and the side cover.

In one aspect, there is a display device comprising a display panel including a front substrate and a back substrate, a frame positioned in the rear of the display panel, a supporting film which is attached to a back surface of the display panel and is connected to the frame, and an optical layer positioned between the supporting film and the frame, wherein an empty space is provided between an end of the optical layer and the supporting film in a horizontal direction.

The display panel may further include a front polarizing film attached to a front surface of the front substrate and a back polarizing film attached to a back surface of the back substrate. A first surface of the back polarizing film may be attached to the back surface of the back substrate. The supporting film may be attached to a second surface opposite the first surface of the back polarizing film.

A width of the back polarizing film may be greater than a width of the optical layer in the horizontal direction.

The supporting film may include a first part and a second part positioned on at least one end of the first part in the horizontal direction. A half cutting portion may be provided between the first part and the second part.

A width of the first part may be greater than a width of the back polarizing film in the horizontal direction, and the width of the back polarizing film may be greater than a width of the optical layer in the horizontal direction.

The supporting film may further include a third part positioned on at least one end of the second part in the horizontal direction, and the third part may be connected to the frame.

A half cutting portion may be provided between the second part and the third part.

The third part may include a hole through which a fastening member for fastening the third part to the frame passes.

The display device may further comprise a black layer positioned between the front substrate and the back substrate of the display panel, and the black layer may be positioned outside the display panel. The black layer may overlap the optical layer in the horizontal direction.

The black layer may include a first end and a second end opposite the first end. The second end may be directed toward the outside of the display panel, and the first end may be directed toward the middle of the display panel. When a distance between the end of the optical layer and the first end of the black layer in the horizontal direction is a first distance, and a distance between the supporting film and the end of the optical layer in the horizontal direction is a second distance, the second distance may be greater than the first distance.

A width of the frame may be greater than a width of the optical layer in the horizontal direction.

The display device may further comprise a resin layer which contacts an end of the back polarizing film and is positioned between the supporting film and the back substrate of the display panel.

The resin layer may include a portion which protrudes further than the supporting film in a direction far from the middle of the display panel.

The display panel may include a first short side, a second short side opposite the first short side, a first long side adjacent to the first short side and the second short side, and a second long side opposite the first long side. The resin layer may include a first resin layer corresponding to the first short side and a second resin layer corresponding to the second short side.

The resin layer may further include a third resin layer corresponding to the first long side.

The display device may further comprise a back cover positioned in the rear of the frame and a side cover positioned on the side of the display panel. The side cover may include a portion which is far from the middle of the display device as it goes to a back part.

The back cover and the side cover may be fastened to each other using a fastening member, or the back cover and the side cover may form one body.

An end of the side cover may protrude further than a front surface of the display panel.

A distance between the display panel and the side cover may be less than a distance between the supporting film and the side cover in the horizontal direction.

The display device may further comprise a buffer having elasticity positioned between the display panel and the side cover.

## Claims

1. A display device comprising:
a display panel (100) including a front substrate (101) and a back substrate (111);
a frame (1600) provided behind the display panel (100);
a supporting film (400) provided between the display panel (100) and the frame (1600), the supporting film (400) being connected to a rear surface of the display panel (100) and to the frame (1600); and
an optical layer (110) provided between the supporting film (400) and the frame (1600),
wherein the supporting film (400) extends from the display panel (100) to the frame (1600) such that the supporting film (400) is provided a prescribed distance (D1) from an edge of the optical layer (110) in a first direction (DR1) parallel to a front surface of the display panel (100).

2. The display device of claim 1, wherein the display panel (100) further includes:
a front polarizing film (3400) attached to a front surface of the front substrate (101), and
a back polarizing film (3410) attached to a rear surface of the back substrate (111),
wherein a first surface of the back polarizing film (3410) is attached to the rear surface of the back substrate (111), and
wherein the supporting film (400) is attached to a second surface of the back polarizing film (3410) opposite the first surface.

3. The display device of claim 2, wherein a width of the back polarizing film (3410) is greater than a width of the optical layer (110) in the first direction (DR1).

4. The display device as claimed in any one of the preceding claims, wherein the supporting film (400) includes a first region (400A) and a second region (400B) provided adjacent to the first region (400A) in the first direction (DR1),
wherein a groove is provided on the supporting film (400) between the first region (400A) and the second region (400B), the supporting film (400) being bent at the groove.

5. The display device as claimed in any one of the preceding claims, wherein a width of the first region (400A) is greater than a width of the back polarizing film (3410) in the first direction (DR1), and the width of the back polarizing film (3410) is greater than a width of the optical layer (110) in the first direction (DR1).

6. The display device as claimed in any one of the preceding claims, wherein the supporting film (400) includes a third region (400C) provided adjacent the first region (400A) opposite the second region (400B) in the first direction (DR1), the third region (400C) being connected to the frame (1600).

7. The display device of claim 6, wherein a groove is provided between the first region (400A) and the third region (400C), the supporting film (400) being bent at the groove.

8. The display device of claim 6 or 7, wherein the third region (400C) includes at least one hole (H1) through which a fastening member (S100) is provided to fasten the third region (400C) to the frame (1600).

9. The display device as claimed in any one of the preceding claims 2-8, further comprising a resin layer (900) provided between the supporting film (400) and the back substrate (111) of the display panel (100), the resin layer (900) contacting an end of the back polarizing film (3410).

10. The display device of claim 9, wherein the resin layer (900) includes a portion that protrudes beyond the supporting film (400) in the first direction (DR1) away from a center of the display panel (100).

11. The display device as claimed in claim 9 or 10, wherein the display panel (100) includes
a first short side (SS1),
a second short side (SS2) opposite the first short side (SS1),
a first long side (LS1) adjacent to the first short side (SS1) and the second short side (SS2), and
a second long side (LS2) opposite the first long side (LS1),
wherein the resin layer (900) includes
a first resin layer (900S1) corresponding to the first short side (SS1), and
a second resin layer (900S2) corresponding to the second short side (SS2).

12. The display device of claim 11, wherein the resin layer (900) includes a third resin layer (900L1) corresponding to the first long side (LS1).

13. The display device as claimed in any one of the preceding claims, further comprising an opaque layer (BLK) provided between the front substrate (101) and the back substrate (111) of the display panel (100), wherein the opaque layer (BLK) is provided along an outer portion of the display panel (100) and spatially overlaps the optical layer (110) in a second direction (DR2) perpendicular to the front surface of the display panel (100).

14. The display device of claim 13, wherein the opaque layer (BLK) includes a first end (E1) and a second end (E2) opposite the first end (E1),
wherein the second end (E2) is provided toward an outer edge of the display panel (100) and the first end (E1) is provided toward a center of the display panel (100), and
wherein a distance (T3) between the first end (E1) of the opaque layer (BLK) and the edge of the optical layer (110) in the first direction (DR1) is less than the prescribed distance (D1) between the supporting film (400) and the optical layer (110) in the first direction (DR1).

15. The display device as claimed in any one of the preceding claims, wherein a width of the frame (1600) is greater than a width of the optical layer (110) in the first direction (DR1).
